# EUROPEAN PATENT APPLICATION

(11) **EP 4 491 409 A1**
(43) Date of publication of application: **15.01.2025**
(21) Application number: 23766482.6
(22) Date of filing: 16.02.2023
(51) Int. Cl.: B41M 5/00, B41J 2/01, C09D 11/326

(54) **IMAGE RECORDING METHOD**

(30) Priority: 10.03.2022 JP 2022037507
(71) Applicant: FUJIFILM Corporation, Tokyo 106-8620 (JP)
(72) Inventor: SHINOHARA, Ryuji, Ashigarakami-gun, Kanagawa 258-8577 (JP); HONGO, Yushi, Ashigarakami-gun, Kanagawa 258-8577 (JP); KARIYA, Toshihiro, Ashigarakami-gun, Kanagawa 258-8577 (JP); SHIMOYAMA, Tatsuya, Ashigarakami-gun, Kanagawa 258-8577 (JP)
(74) Representative: Klunker IP Patentanwälte PartG mbB
(86) International application number: PCT/JP2023/005560
(87) International publication number: WO 2023/171302

(57) **Abstract**

Provided is an image recording method including an image recording step of sequentially applying a first ink and a second ink onto a recording medium transported at a transportation speed of 40 m/min or greater and 300 m/min or less and heating and drying the inks, in which in a case where a difference in landing time between the first ink and the second ink is defined as T1 seconds and a time from a time point at which a last liquid droplet of the second ink lands to a time point at which the liquid droplet is heated and dried is defined as T2 seconds, T1 is 0.020 or longer and 1.2 or shorter, and T2 is 2.0 or shorter, each of the first ink and the second ink contains water, an organic solvent, a surfactant, and wax particles, the organic solvent includes a solvent species A represented by Formula (1) or Formula (2) and having a ClogP value of -0.60 or greater and 2.70 or less, and the surfactant includes an acetylene-based surfactant (A), a polyoxyethylene alkyl ether-based surfactant (B), and a polyether-modified silicone-based surfactant (C).

## Description

### BACKGROUND OF THE INVENTION

### 1. Field of the Invention

The present disclosure relates to an image recording method.

### 2. Description of the Related Art

In the related art, image recording using an ink jet ink containing water have been examined.

For example, JP2013-180423A discloses the following image forming method as an image forming method that enables formation of a multicolor image having a wide color gamut at a high speed.

The image forming method disclosed in JP2013-180423A includes a step of applying a treatment liquid that aggregates components in an ink to a recording medium and a step of applying a first ink containing a pigment, water, and resin particles having a content of 1% to 3% by mass to a surface of the recording medium to which the treatment liquid has been applied and applying a second ink having a hue different from the hue of the first ink onto the applied first ink at a speed at which an ink droplet rate during landing reaches 6 m/sec to 10 m/sec such that an interval from a time point of landing of the first ink to a time point of landing of the second ink reaches 200 msec or shorter to form a multicolor image, in which a dot diameter ϕ2 of the second ink applied onto the first ink and a dot diameter ϕ1 in a case where a primary color image is formed by applying, in the same appropriate amount of the ink as the appropriate amount of the ink used to form the multicolor image, the second ink to the surface of the recording medium to which the treatment liquid has been applied satisfy a relationship of 0.90 ≤ cp2/cp 1 ≤ 1.10.

JP2015-124223A discloses the following aqueous ink for ink jet recording as an aqueous ink for ink jet recording with excellent jetting stability and storage stability of the aqueous ink and with excellent quick-drying fixing properties and image uniformity in a case where an image is formed particularly on a low water absorption recording medium.

The aqueous ink for ink jet recording disclosed in JP2015-124223Ais an aqueous ink for ink jet recording, containing a pigment (A), a water-insoluble polymer (B), an organic solvent (C), and water, in which the organic solvent (C) contains diethylene glycol isopropyl ether (c1) and an organic solvent (c2) having a 1-octanol/water partition coefficient less than that of the diethylene glycol isopropyl ether (c1), a total content of the pigment (A), the water-insoluble polymer (B), and the diethylene glycol isopropyl ether (c1) is 5.0% by mass or greater, and a value obtained by multiplying a total content of the pigment (A) and the water-insoluble polymer (B) (% by mass) by a content (% by mass) of the diethylene glycol isopropyl ether (c1) is 10 or greater and 300 or less.

### SUMMARY OF THE INVENTION

In recent years, with the progress of digitalization, high-quality (for example, 1200 dot per inch (dpi) quality) image recording is required to be performed at a high speed (for example, a recording medium having a transportation speed of 40 m/min or greater) without increasing the size of a device.

In regard to the above-described high quality, in the related art, it has been found that in a case where an image having a quality of 1200 dpi is recorded, the jetting stability of a 1200 dpi head is insufficient, jetting disturbance (for example, satellites and/or jet bending) occurs, and as a result, the resolution of the image may be reduced (for example, fine characters cannot be reproduced).

Therefore, even in a case where an image having a quality of 1200 dpi or greater is recorded, jetting disturbance is suppressed, and thus a decrease in resolution caused by the jetting disturbance is suppressed, which is desirable.

Further, in the related art, it has been found that in a case where high-quality image recording is performed at a high speed, problems such as a decrease in graininess of an image due to coalescence (that is, landing interference) of pre-drops and post-drops of an ink and degradation of rub resistance of an image caused by insufficient drying of the ink are likely to occur.

Further, it was also found that even in a case where the graininess and/or the rub resistance can be improved by the technique of the related art, intercolor bleeding between two or more kinds of inks having different hues may occur.

In the present disclosure, "decrease in graininess of an image" denotes that granularity (that is, roughness) of the image is likely to be conspicuous, and "image has excellent graininess" denotes that the granularity (that is, roughness) of the image is suppressed.

That is, "image has excellent graininess" denotes that the image has an excellent granularity suppression property (that is, roughness).

An object of an aspect of the present disclosure is to provide an image recording method that enables recording of an image with excellent graininess (that is, the granularity suppression property), resolution, and rub resistance and with suppressed intercolor bleeding.

The present disclosure includes the following aspects.
<1> An image recording method comprising: a step of recording an image by sequentially applying a first ink and a second ink, which have hues different from each other, onto a recording medium transported at a transportation speed of 40 m/min or greater and 300 m/min or less respectively under a condition that a resolution in a direction orthogonal to a transport direction of the recording medium by an ink jet method is 1200 dpi or greater, and heating and drying the applied first ink and second ink, in which in the step of recording an image, in a case where a difference in landing time between the first ink and the second ink is defined as T1 seconds and a time from a time point at which a last liquid droplet of the second ink lands to a time point at which the liquid droplet is heated and dried is defined as T2 seconds, T1 is 0.020 or longer and 1.2 or shorter, and T2 is 2.0 or shorter, each of the first ink and the second ink contains water, an organic solvent, a surfactant, and wax particles, the organic solvent includes a solvent species A represented by Formula (1) or Formula (2) and having a ClogP value of -0.60 or greater and 2.70 or less, and the surfactant includes an acetylene-based surfactant (A), a polyoxyethylene alkyl ether-based surfactant (B) having an HLB value of 4.0 or greater and 18.0 or less, and a polyether-modified silicone-based surfactant (C). 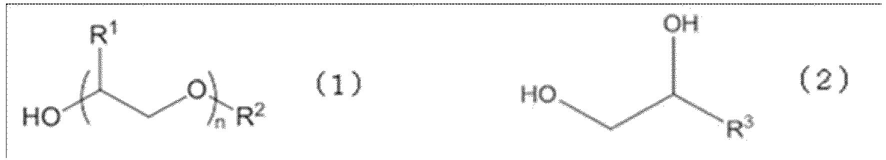 In Formula (1), R¹ represents a hydrogen atom or a methyl group, R² represents a chain-like hydrocarbon group having 1 to 6 carbon atoms, and n represents an integer of 1 to 3.
   In Formula (2), R³ represents a chain-like hydrocarbon group having 1 to 4 carbon atoms.
<2> The image recording method according to <1>, in which in each of the first ink and the second ink, in a case where a sum of products of the ClogP of the solvent species A and a content of the solvent species A with respect to a total amount of the inks in units of % by mass is calculated, the sum of products is -10.00 or greater and 10.00 or less.
<3> The image recording method according to <1> or <2>, in which the transportation speed of the recording medium is 60 m/min or greater and 200 m/min or less.
<4> The image recording method according to any one of <1> to <3>, in which each of the first ink and the second ink has a dynamic surface tension of 29.0 mN/m or greater and 38.0 mN/m or less at 10 milliseconds.
<5> The image recording method according to any one of <1> to <4>, in which each of the first ink and the second ink contains resin particles.
<6> The image recording method according to any one of <1> to <5>, in which the solvent species A includes at least one selected from the group consisting of ethylene glycol monohexyl ether, diethylene glycol monoethyl ether, diethylene glycol monoisopropyl ether, diethylene glycol monobutyl ether, diethylene glycol monoisobutyl ether, propylene glycol monomethyl ether, propylene glycol monoethyl ether, propylene glycol monopropyl ether, propylene glycol monobutyl ether, 1,2-butanediol, 1,2-pentanediol, and 1,2-hexanediol.
<7> The image recording method according to any one of <1> to <6>, in which the acetylene-based surfactant (A) in each of the first ink and the second ink includes an acetylene-based surfactant having an HLB value of 3.5 or greater and 9.0 or less.
<8> The image recording method according to any one of <1> to <7>, in which a total content of the acetylene-based surfactant (A) and the polyoxyethylene alkyl ether-based surfactant (B) having an HLB value of 4.0 or greater and 18.0 or less in each of the first ink and the second ink is in a range of 1.0% by mass to 3.0% by mass with respect to a total amount of the inks.
<9> The image recording method according to any one of <1> to <8>, in which the wax particles in each of the first ink and the second ink include at least one selected from the group consisting of polyethylene wax and carnauba wax.

According to an aspect of the present disclosure, it is possible to provide an image recording method that enables recording of an image with excellent graininess (that is, the granularity suppression property), resolution, and rub resistance and with suppressed intercolor bleeding.

### BRIEF DESCRIPTION OF THE DRAWINGS

Fig. 1 is a schematic configuration view showing an example of an ink jet recording device for performing an image recording method of the present disclosure.
Fig. 2 is a schematic view showing a character image used for evaluating resolution in examples.
Fig. 3 is a schematic view showing a character image used for evaluation of resolution in examples.

### DESCRIPTION OF THE PREFERRED EMBODIMENTS

In the present specification, a numerical range shown using "to" indicates a range including the numerical values described before and after "to" as a minimum value and a maximum value, respectively.

In a numerical range described in a stepwise manner in the present specification, an upper limit or a lower limit described in a certain numerical range may be replaced with an upper limit or a lower limit in another numerical range described in a stepwise manner. Further, in a numerical range described in the present specification, an upper limit or a lower limit described in a certain numerical range may be replaced with a value described in an example.

In the present specification, in a case where a plurality of substances corresponding to respective components in a composition are present, the amount of the respective components in the composition indicates the total amount of the plurality of substances present in the composition unless otherwise specified.

In the present specification, a combination of two or more preferred embodiments is a more preferred embodiment.

In the present specification, the meaning of the term "step" includes not only an independent step but also a step whose intended purpose is achieved even in a case where the step is not clearly distinguished from other steps.

In the present specification, the term "image" means general films, and the term "image recording" means formation of an image (that is, a film). Further, the concept of "image" in the present specification also includes a solid image.

In the present specification, "(meth)acrylate" is a concept including both acrylate and methacrylate, "(meth)acryloyl group" is a concept including both acryloyl group and methacryloyl group, and "(meth)acrylic acid" has a concept including both acrylic acid and methacrylic acid.

An image recording method of the present disclosure is an image recording method including a step of recording an image (hereinafter, also referred to as "image recording step") by sequentially applying a first ink and a second ink, which have hues different from each other, onto a recording medium transported at a transportation speed of 40 m/min or greater and 300 m/min or less respectively under a condition that a resolution in a direction orthogonal to a transport direction of the recording medium by an ink jet method is 1200 dpi or greater, and heating and drying the applied first ink and second ink, in which in the image recording step, in a case where a difference in landing time between the first ink and the second ink is defined as T1 seconds and a time from a time point at which a last liquid droplet of the second ink lands to a time point at which the liquid droplet is heated and dried is defined as T2 seconds, T1 is 0.020 or longer and 1.2 or shorter, and T2 is 2.0 or shorter, each of the first ink and the second ink contains water, an organic solvent, a surfactant, and wax particles, the organic solvent includes a solvent species A represented by Formula (1) or Formula (2) and having a ClogP value of -0.60 or greater and 2.70 or less, and the surfactant includes an acetylene-based surfactant (A), a polyoxyethylene alkyl ether-based surfactant (B) having an HLB value of 4.0 or greater and 18.0 or less, and a polyether-modified silicone-based surfactant (C).

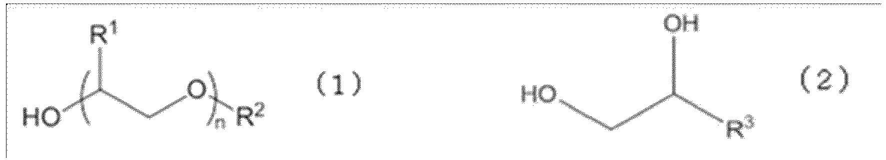

In Formula (1), R¹ represents a hydrogen atom or a methyl group, R² represents a chain-like hydrocarbon group having 1 to 6 carbon atoms, and n represents an integer of 1 to 3.

In Formula (2), R³ represents a chain-like hydrocarbon group having 1 to 4 carbon atoms.

According to the image recording method of the present disclosure, an image with excellent graininess, resolution, and rub resistance and with suppressed intercolor bleeding can be recorded.

More specifically, in the image recording method of the present disclosure, high-quality image recording (that is, image recording in which a high-quality image is obtained) is realized by setting the resolution in a case of applying each of the first ink and the second ink to 1200 dots per inch (dpi) or greater.

Further, in the image recording method of the present disclosure, high-speed image recording is realized by setting the transportation speed of the recording medium to 40 m/min or greater and setting the T1 to 1.2 or shorter and the T2 to 2.0 or shorter.

In the image recording method of the present disclosure, the problems in high-quality and high-speed image recording, such as graininess, resolution, rub resistance, and intercolor bleeding, can be solved.

The reason why such an effect can be obtained is assumed as follows, but the image recording method of the present disclosure is not limited to the following reason.

The factors of the recording medium having a transportation speed of 300 m/min or less, a T1 of 0.020 or longer (that is, the speed of image recording is not extremely high), each of the first ink and the second ink containing the acetylene-based surfactant (A) and the polyoxyethylene alkyl ether-based surfactant (B), and each of the first ink and the second ink containing an organic solvent including the solvent species A are considered to contribute to the effect of the graininess (that is, suppression of granularity).

The factors of the recording medium having a transportation speed of 300 m/min or less, a T1 of 0.020 or longer (that is, the speed of image recording is not extremely high), and a T2 or 2.0 or shorter (that is, the T2 which is the time from the time point at which the last liquid droplet of the second ink lands to the time point at which the liquid droplet is heated and dried is not extremely long) are considered to contribute to the effect of the resolution.

The factors of the recording medium having a transportation speed of 300 m/min or less, a T1 of 0.020 or longer (that is, the speed of image recording is not extremely high), and each of the first ink and the second ink containing wax particles are considered to contribute to the effect of the rub resistance.

The factors of the recording medium having a transportation speed of 40 m/min or less, a T1 of 1.2 or longer, a T2 or 2.0 or shorter (that is, the speed of image recording is not extremely low), each of the first ink and the second ink containing the polyoxyethylene alkyl ether-based surfactant (B), and each of the first ink and the second ink containing the polyether-modified silicone-based surfactant (C) are considered to contribute to the effect of the suppression of intercolor bleeding.

Hereinafter, preferable aspects of the image recording method of the present disclosure will be described.

### [Recording medium]

The recording medium is not particularly limited, and examples thereof include so-called coated paper used for general offset printing and the like. The coated paper is provided with a coating layer obtained by applying a coating material to a surface of high-quality paper, alkaline paper, or the like, which is mainly formed of cellulose and is not generally surface-treated.

The coated paper may be generally available on the market. As the coated paper, for example, coated paper for general printing can be used, and specific examples thereof include coated paper (A2, B2) such as "OK TOPCOAT+" (manufactured by OJI PAPER CO., LTD.), and "AURORA COAT" and "ULITE" (manufactured by NIPPON PAPER INDUSTRIES CO., LTD.), and art paper (A1) such as "TOKUBISHI ART" (manufactured by MITSUBISHI PAPER MILLS LIMITED).

The recording medium may be a low water absorption recording medium or a non-water absorption recording medium.

In the present disclosure, the low water absorption recording medium refers to a recording medium having a water absorption coefficient Ka of 0.05 mL/m²·ms^{1/2} to 0.5 mL/m²·ms^{1/2}, preferably 0.1 mL/m²·ms^{1/2} to 0.4 mL/m²·ms^{1/2} and more preferably 0.2 mL/m²·ms^{1/2} to 0.3 mL/m²·ms^{1/2}.

In addition, the non-water absorption recording medium refers to a recording medium having a water absorption coefficient Ka of less than 0.05 mL/m²·ms^{1/2}.

The water absorption coefficient Ka is synonymous with one described in JAPAN TAPPI Pulp and Paper Test Method No. 51:2000 (published by Pulp and Paper Technology Association). Specifically, the absorption coefficient Ka is calculated from the difference in amount of water transfer between the contact time of 100 ms and the contact time of 900 ms, using an automatic scanning absorptometer KM500Win (manufactured by KUMAGAI RIKI KOGYO Co., Ltd.).

A resin base material is preferable as the non-water absorption recording medium. Examples of the resin base material include a base material obtained by molding a thermoplastic resin in a sheet shape.

It is preferable that the resin base material contains polypropylene, polyethylene terephthalate, nylon, polyethylene, or polyimide.

The resin base material may be a transparent resin base material or a colored resin base material, or at least a part thereof may be subjected to a metal vapor deposition treatment or the like.

The shape of the resin base material is not particularly limited, but a sheet-like resin base material is preferable. From the viewpoint of the productivity of the printed material, a sheet-like resin base material which is capable of forming a roll by being wound is more preferable.

### [Transportation speed]

In the image recording step, the first ink and the second ink are applied in this order onto the recording medium transported at a transportation speed of 40 m/min or greater and 300 m/min or less.

The factor that the transportation speed of the recording medium is 40 m/min or greater contributes to an increase in speed.

The fact that the transportation speed of the recording medium is 300 m/min or less contributes to the effects of graininess, resolution, and rub resistance.

The transportation speed of the recording medium is preferably 50 m/min or greater and 250 m/min or less and more preferably 60 m/min or greater and 200 m/min or less.

### [Conditions for applying ink]

In the image recording step, the first ink and the second ink having hues different from each other are applied in this order onto the recording medium to be transported by an ink jet method under the condition that the resolution in a direction orthogonal to the transport direction of the recording medium is 1200 dpi or greater.

As long as these conditions are satisfied, the condition for applying the first ink and the condition for applying the second ink may be the same as or different from each other.

In the image recording step, application of the first ink and the second ink in this order onto the recording medium to be transported denotes that the first ink is applied onto the recording medium to be transported and the second ink is applied onto the applied first ink.

That is, in the image recording step, a region to which the second ink is applied is set as a region including an overlapping portion overlapping with the first ink on the recording medium. The second ink may be applied onto both the applied first ink and a region where the first ink is not applied.

A multicolor image (for example, a secondary color image) formed of the first ink and the second ink can be recorded by the image recording step. Examples of the secondary color image include a blue image (hereinafter, also referred to as an image B) formed of a cyan ink (hereinafter, also referred to as an ink C) serving as the first ink and a magenta ink (hereinafter, also referred to as an ink M) serving as the second ink.

In the image recording step, the first ink is an ink to be applied as an ink of a first color, and the second ink is an ink to be applied as an ink of a second or subsequent color.

The second ink may be one kind of ink (for example, a cyan ink, a magenta ink, a yellow ink, a black ink, or a white ink) or may be two or more kinds of inks (for example, two or more kinds of inks including at least one selected from the group consisting of a cyan ink, a magenta ink, a yellow ink, a black ink, and a white ink).

The details of each of the first ink and the second ink will be described below.

In the image recording step, other inks in addition to the first ink and the second ink may be applied.

### [Ink jet method]

A known method can be employed as the inkjet method.

The ink jet method in the application of the first ink and the ink jet method in the application of the second ink may be the same as or different from each other.

Examples of the inkjet method include an electric charge control method of jetting an ink by using an electrostatic attraction force, a drop-on-demand method (pressure pulse method) of using a vibration pressure of a piezoelectric element, an acoustic ink jet method of converting an electric signal into an acoustic beam, irradiating an ink with the acoustic beam, and jetting the ink using a radiation pressure, and a thermal ink jet (Bubble jet (registered trademark)) method of heating an ink to form air bubbles and utilizing the generated pressure.

As an ink jet head used in the ink jet method, a line head in which recording elements are arranged to correspond to the entire region of one side of a base material is preferable.

In the ink jet method using a line head, a pattern can be formed on the entire surface of a base material by scanning the base material in a direction intersecting the arrangement direction of the recording elements, and a transport system such as a carriage that makes a short head perform scanning is not required.

In addition, since movement of the carriage and complex scanning control between the carriage and the base material are not required in the inkjet method using a line head, only the base material moves, and thus an increase in recording speed can be realized as compared with a shuttle method of scanning a short head.

The liquid droplet volume of the ink to be jetted from the inkjet head is preferably in a range of 1 pL (picoliter) to 100 pL, more preferably in a range of 1.5 pL to 80 pL, and still more preferably in a range of 1.8 pL to 50 pL.

### [Resolution]

The resolution in a direction orthogonal to the transport direction of the recording medium is 1200 dpi or greater under the condition for applying each of the first ink and the second ink.

The resolution contributes to a high quality of an image to be obtained.

The resolution is preferably 1200 dpi or greater and 2400 dpi or less.

### [Heating and drying]

In the image recording step, an image is obtained by heating and drying the first ink and the second ink applied onto the recording medium.

The temperature of heating and drying the inks is preferably in a range of 80°C to 200°C, more preferably in a range of 100°C to 170°C, and still more preferably in a range of 120°C to 140°C.

The time of heating and drying the inks is preferably in a range of 0.3 seconds to 6.0 seconds, more preferably in a range of 0.5 seconds to 3.0 seconds, and still more preferably in a range of 0.5 seconds to 2.5 seconds.

A heating method for heating and drying the inks is not particularly limited.

Examples of the heating method include heating methods using a heat drum, hot air, an infrared lamp, a hot oven, and a hot plate.

Two or more of the above-described methods may be used in combination as the heating method.

### [T1 and T2]

In the image recording step, in a case where a difference in landing time between the first ink and the second ink is defined as T1 seconds and a time from a time point at which a last liquid droplet of the second ink lands to a time point at which the liquid droplet is heated and dried is defined as T2 seconds, the T1 is 0.020 or greater and 1.2 or less, and the T2 is 2.0 or less.

The T1 and the T2 are related to the image recording speed. As these values decrease, the image recording speed increases.

The T1 denotes a difference in landing time (seconds) between the first ink and the second ink.

Here, the difference in landing time (seconds) between the first ink and the second ink denotes a time from a time point at which the last liquid droplet of the first ink lands on a certain point X of the recording medium to a time point at which the first liquid droplet of the second ink lands on the point X.

The T1 is 0.020 or longer and 1.2 or shorter.

The fact that the T1 is 0.020 or longer (that is, the image recording speed is not extremely high) contributes to the effects of graininess, resolution, and rub resistance.

The fact that the T1 is 1.2 or shorter (that is, the image recording speed is not extremely low) contributes to the effect of suppression of intercolor bleeding.

The T1 is preferably 0.050 or longer and 1.0 or shorter and more preferably 0.1 or longer and 0.5 or shorter.

The T2 denotes a time (seconds) from a time point at which the last liquid droplet of the second ink lands to a time point at which this liquid droplet is heated and dried (that is, to a time point at which the heating and drying of this liquid droplet is started).

The T2 is 2.0 or shorter.

The fact that the T2 is 2.0 or shorter (that is, the image recording speed is not extremely low) contributes to the effect of suppression of intercolor bleeding.

The lower limit of T2 is not particularly limited.

The T2 is, for example, T1 or longer and 2.0 or shorter.

### [One example of image recording device (recording device A)]

An image recording device for performing the image recording method of the present disclosure is not particularly limited.

The image recording method of the present disclosure can be suitably performed, for example, by the following recording device A.

The recording device A is an image recording device including a transport mechanism that transports a recording medium, a first ink jet head for jetting the first ink, a second ink jet head for jetting the second ink, and a drying zone that includes a drying unit for drying the first ink and the second ink, in which the first ink jet head, the second ink jet head, and the drying zone are disposed in this order in the transport direction of the recording medium.

The resolution of each of the first ink jet head and the second ink jet head in a direction orthogonal to the transport direction of the recording medium is 1200 dpi or greater.

The disposition of each of the first ink jet head and the second ink jet head is preferably a disposition in which the arrangement direction of nozzles in the ink jet head and the transport direction of the recording medium intersect each other (for example, orthogonal to each other).

In a case where the image recording method of the present disclosure is performed by the above-described recording device A, the T1, which is the difference in landing time between the first ink and the second ink, is determined as a time from a time point at which a point X1 on the recording medium passes through the first inkjet head to a time point at which the point X1 passes through the second inkjet head.

The T1 can be determined, for example, based on a distance d1 between an end portion of the first ink jet head on a downstream side (that is, an end portion of the recording medium on the downstream side in the transport direction, the same applies hereinafter) and an end portion of the second ink jet head on a downstream side, and a transportation speed v1 of the recording medium.

In the case where the image recording method of the present disclosure is performed by the above-described recording device A, the time T2 from a time point at which the last liquid droplet of the second ink lands to a time point at which the liquid droplet is heated and dried is determined as a time from a time point at which the point X1 on the recording medium passes through the second inkjet head to a time point at which the point X1 enters the drying zone.

The T2 is determined, for example, based on a distance d2 between an end portion of the second ink jet head on a downstream side and an end portion of the drying zone on an upstream side (that is, an end portion of the recording medium in the transport direction on an upstream side), and the transportation speed v1 of the recording medium.

As described above, the recording device A has an advantage that the T1 and the T2 can be easily determined.

The distance (gap) between each of the first inkjet head and the second inkjet head and the recording medium in the recording device A is preferably in a range of 0.4 mm to 4 mm, more preferably in a range of 0.5 mm to 3 mm, and still more preferably in a range of 0.6 mm to 2 mm.

In a case where two or more kinds of inks are used as the second ink, the recording device A may include two or more second inkjet heads.

The two or more second ink jet heads in this case can be arranged in the transport direction of the recording medium.

For example, the arrangement of the first ink jet head and the second ink jet head in a case where a black ink is used as the first ink and a total of three kinds of inks, which are a cyan ink, a magenta ink, and a yellow ink, are used as the second ink is not particularly limited, and examples thereof include an arrangement in which a first ink jet head for a black ink, a second ink jet head for a cyan ink, a second ink jet head for a magenta ink, and a second ink jet head for a yellow ink are arranged in this order from an upstream side of the recording medium in the transport direction.

Specific examples of the recording device A include an ink jet recording device for continuous form paper.

The ink jet recording device for continuous form paper can refer to known documents such as JP2019-59804A (for example, paragraphs 0085 to 0104).

Hereinafter, an example of the ink jet recording device for continuous form paper, which is a specific example of the recording device A, will be described with reference to the accompanying drawings.

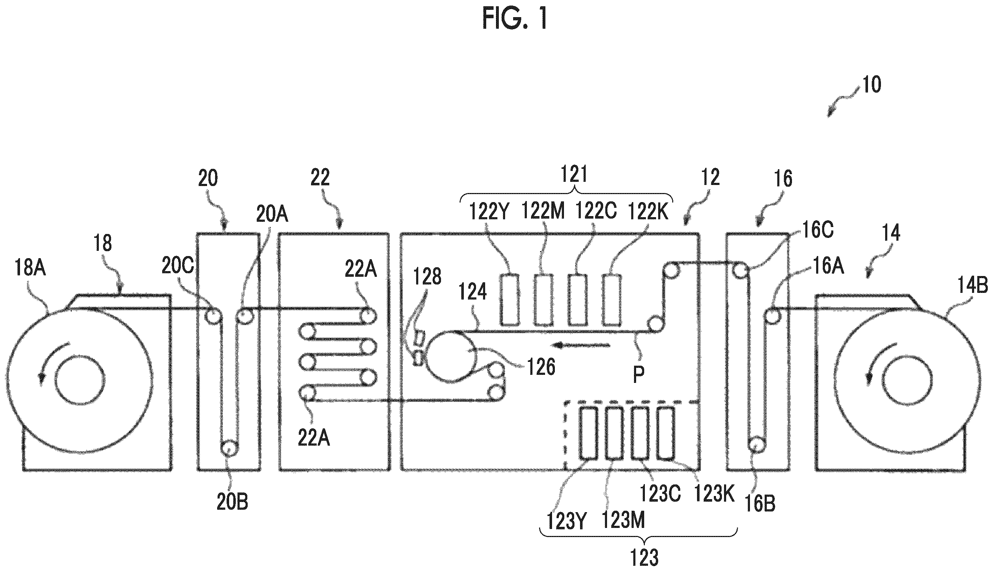

Fig. 1 is a schematic configuration view of the inkjet recording device according to the present example.

As shown in Fig. 1, an inkjet recording device 10 is a recording device including a jet head 122 (jet device 121 including a jet head 122) that jets the ink onto continuous form paper P serving as a recording medium.

In the ink jet recording device 10, an image is recorded by jetting the ink onto the continuous form paper P.

Specifically, the ink jet recording device 10 includes, for example, an image recording unit 12 that records an image on continuous form paper as a recording medium P (hereinafter, also referred to as "continuous form paper P").

The recording device 10 includes a supply unit 14 that supplies the continuous form paper P to the image recording unit 12, and a buffer unit 16 that adjusts the transport amount or the like of the continuous form paper P to be supplied from the supply unit 14 to the image recording unit 12. The buffer unit 16 is disposed between the image recording unit 12 and the supply unit 14.

The recording device 10 includes, for example, a post-treatment unit 18 that accommodates the continuous form paper P to be discharged from the image recording unit 12, and a buffer unit 20 that adjusts the transport amount or the like of the continuous form paper P to be discharged from the image recording unit 12 to the post-treatment unit 18. The buffer unit 20 is disposed between the image recording unit 12 and the post-treatment unit 18.

The recording device 10 includes a cooling unit 22 that is disposed between the image recording unit 12 and the buffer unit 20 and cools the continuous form paper P that is transported from the image recording unit 12.

The image recording unit 12 includes, for example, a roll member (the reference numeral is not shown) that guides the continuous form paper P along a transport path 124 of the continuous form paper P, and a jet device 121 that jets the ink (liquid droplets of the ink) to the continuous form paper P to be transported along the transport path 124 of the continuous form paper P to record an image.

The jet device 121 includes a jet head 122 that jets the ink to the continuous form paper P. The jet head 122 is, for example, a long recording head in which an effective recording region (arrangement region of nozzles for jetting the ink) is set to be greater than or equal to the width of the continuous form paper P (length of the continuous form paper P in a direction intersecting (for example, orthogonal to) the transport direction of the continuous form paper P).

As the jet head 122, known jet heads such as a so-called thermal type jet head that jets liquid droplets of the ink by heat and a so-called piezo type jet head that jets liquid droplets of the ink by the pressure may be used.

The jet head 122 includes, for example, a jet head 122K that jets an ink to the continuous form paper P to record a black (K) image, a jet head 122C that records a cyan (C) image, a jet head 122M that records a magenta (M) image, and a jet head 122Y that records a yellow (Y) image. Further, the ink jet head 122K, the jet head 122C, the jet head 122M, and the jet head 122Y are arranged in this order to face the continuous form paper P from the upstream side to the downstream side in the transport direction of the continuous form paper P (hereinafter, simply referred to as "paper transport direction").

In this example, the jet head 122K corresponds to the first ink jet head, the jet head 122C, the jet head 122M, and the jet head 122Y correspond to the second ink jet head, the black ink corresponds to the first ink, and the cyan ink, the magenta ink, and the yellow ink correspond to the second ink.

Further, in the description of the jet head, in a case where K, C, M, and Y are not distinguished from each other, K, C, M, and Y attached to the reference numerals are omitted.

The jet heads 122K, 122C, 122M, and 122Y are respectively connected to ink cartridges 123K, 123C, 123M, and 123Y of each color, which are attached to and detached from the ink jet recording device 10, through supply pipes (not shown), and the inks of each color are respectively supplied to the jet heads 122 by the ink cartridges 123.

The jet head 122 is not limited to the form in which four jet heads 122 corresponding to the above-described four colors are arranged, and may be in the form in which four or more jet heads 122 corresponding to four or more colors including other intermediate colors are arranged depending on the purpose thereof.

In both cases, the ink to be applied as the ink of the first color is the first ink, and the inks of the second and subsequent colors are the second inks.

Here, for example, a jet head 122 for high resolution (for example, a jet head with a resolution of 1,200 dpi), which jets the ink in an ink droplet amount of less than 10 pL, is provided as the jet head 122.

In the jet device 121, for example, a drying drum 126 (an example of a drying device) around which the rear surface of the continuous form paper P is wound and which dries the image (ink) on the continuous form paper P while coming into contact with the continuous form paper P to be transported and being rotationally driven is disposed on the downstream side of the jet head 122 in the paper transport direction.

A heating source (for example, a halogen heater, not shown) is incorporated in the drying drum 126. The drying drum 126 dries the image (ink) on the continuous form paper P by heating the image with a heating source.

A hot air blowing device 128 (an example of a drying device) that dries the image (ink) on the continuous form paper P is disposed in the periphery of the drying drum 126. The image (ink) on the continuous form paper P wound around the drying drum 126 is dried by hot air blown by the hot air blowing device 128.

Here, in the jet device 121, other drying devices such as a near-infrared heater (not shown) that dries the image (ink) on the continuous form paper P and a laser irradiation device may be disposed on a downstream side of the jet head 122 in the paper transport direction. The other drying devices such as a near-infrared heater and a laser irradiation device are disposed in place of at least one of the drying drum 126 or the hot air blowing device 128 or in addition to the drying drum 126 and the hot air blowing device 128.

Meanwhile, the supply unit 14 includes a supply roll 14B around which the continuous form paper P to be supplied to the image recording unit 12 is wound, and the supply roll 14B is rotatably supported by a frame member (not shown).

For example, a first pass roller 16A, a dancer roller 16B, and a second pass roller 16C are disposed in the buffer unit 16 in the paper transport direction. The dancer roller 16B moves vertically in Fig. 1 to adjust the tension of the continuous form paper P to be transported to the image recording unit 12 and the amount of the continuous form paper P to be transported.

A collection unit 18 includes a winding roll 18A as an example of a transport unit that winds up the continuous form paper P on which an image is recorded. In a case where the winding roll 18A rotates by receiving a rotational force from a motor (not shown), the continuous form paper P is transported along the transport path 124.

For example, a first pass roller 20A, a dancer roller 20B, and a second pass roller 20C are disposed in the buffer unit 20 in the paper transport direction. The dancer roller 20B moves vertically in Fig. 1 to adjust the tension of the continuous form paper P to be discharged to the collection unit 18 and the amount of the continuous form paper P to be transported.

A plurality of cooling rollers 22A are disposed in the cooling unit 22. The continuous form paper P is cooled by transporting the continuous form paper P between the plurality of cooling rollers 22A.

Next, an operation (recording method) performed by the recording device 10 according to the present embodiment will be described.

In the recording device 10 according to the present embodiment, first, the continuous form paper P is transported from the supply roll 14B of a pretreatment unit 14 to the image recording unit 12 through the buffer unit 16.

Next, in the image recording unit 12, the ink is jetted to the continuous form paper P from each jet head 122 of the jet device 121. In this manner, an image formed of the ink is formed on the continuous form paper P. Thereafter, the image (ink) on the continuous form paper P is dried by the drying drum 126 from the rear surface side of the continuous form paper P (surface on a side opposite to the recording surface). Further, the ink (image) jetted to the continuous form paper P is dried by the hot air blowing device 128 from the surface side (recording surface) of the continuous form paper P. That is, the ink jetted onto the continuous form paper P is dried by the drying drum 126 and the hot air blowing device 128.

Next, in the cooling unit 22, the cooling roller 22A cools the continuous form paper P on which an image is recorded.

Next, the collection unit 18 winds up the continuous form paper P on which an image is recorded using the winding roll 18A through the buffer unit 16.

An image is recorded with the ink on the continuous form paper P serving as the recording medium P by performing the above-described steps.

Further, in the ink jet recording device 10, the method of directly jetting the liquid droplets of the ink onto the surface of the recording medium P by the jet device 121 (jet head 122) has been described, but the present invention is not limited thereto. For example, a method of jetting the liquid droplets of the ink to an intermediate transfer member and transferring the liquid droplets of the ink on the intermediate transfer member to the recording medium may be employed.

Further, in the ink jet recording device 10, the method of recording an image by jetting the ink to the continuous form paper P serving as the recording medium has been described, but a method of recording an image by jetting the ink to sheet paper serving as the recording medium may be employed.

### [First ink and second ink]

The first ink and the second ink have hues different from each other.

Each of the first ink and the second ink contains water, an organic solvent, a surfactant, and wax particles.

The organic solvent in each of the first ink and the second ink includes the solvent species A represented by Formula (1) or Formula (2) and having a ClogP value of -0.60 or greater and 2.70 or less.

Hereinafter, the first ink will be described, and the second ink is the same as the first ink except that the second ink has a hue different from the hue of the first ink. That is, the first ink may be read as the second ink in the following description.

The preferable aspects of the first ink may be the same as or different from the preferable aspects of the second ink.

### <Water>

The first ink contains water.

The content of water is preferably 20% by mass or greater, more preferably 30% by mass or greater, and still more preferably 40% by mass or greater with respect to the total amount of the first ink.

The upper limit of the content of water depends on the amount of other components. The upper limit of the content of water with respect to the total amount of the ink may be 90% by mass, 80% by mass, or the like.

### <Organic solvent>

The first ink contains at least one organic solvent.

### (Solvent species A)

The organic solvent in the first ink includes the solvent species A represented by Formula (1) or Formula (2) and having a ClogP value of -0.60 or greater and 2.70 or less.

The organic solvent in the first ink includes the solvent species A, and thus the graininess of an image is improved.

The solvent species A contained in the first ink may be used alone or two or more kinds thereof.

It is preferable that the solvent species A contained in the first ink includes a solvent species represented by Formula (1).

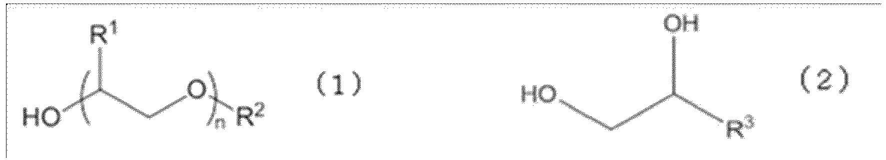

In Formula (1), R¹ represents a hydrogen atom or a methyl group, R² represents a chain-like hydrocarbon group having 1 to 6 carbon atoms, and n represents an integer of 1 to 3.

In Formula (2), R³ represents a chain-like hydrocarbon group having 1 to 4 carbon atoms.

The ClogP value is a value indicating the degree of hydrophobicity.

The hydrophobicity increases as the ClogP value increases.

The ClogP value in the present disclosure is a ClogP value calculated using Chem BiO Draw Ultra 13.0.

Examples of the solvent species A include ethylene glycol ether such as ethylene glycol monoethyl ether (ClogP value: -0.22), ethylene glycol monopropyl ether (ClogP value: 0.31), ethylene glycol monoisopropyl ether (ClogP value: 0.09), ethylene glycol monobutyl ether (ClogP value: 0.84), ethylene glycol monoisobutyl ether (ClogP value: 0.71), ethylene glycol t-butyl ether (ClogP value: 0.49), or ethylene glycol monohexyl ether (ClogP value: 1.90); diethylene glycol ether such as diethylene glycol monoethyl ether (ClogP value: -0.39), diethylene glycol monoisopropyl ether (ClogP value: -0.08), diethylene glycol monobutyl ether (ClogP value: 0.67), diethylene glycol monoisobutyl ether (ClogP value: 0.54), or diethylene glycol monohexyl ether (ClogP value: 1.72); triethylene glycol ether such as triethylene glycol monobutyl ether (ClogP value: 0.49), triethylene glycol monohexyl ether (ClogP value: 1.55), triethylene glycol dimethyl ether (ClogP value: -0.43), or triethylene glycol butyl methyl ether (ClogP value: 1.01); propylene glycol ether such as propylene glycol monomethyl ether (ClogP value: -0.30), propylene glycol monoethyl ether (ClogP value: 0.09), propylene glycol monopropyl ether (ClogP value: 0.62), propylene glycol monobutyl ether (ClogP value: 1.15), or propylene glycol dimethyl ether (ClogP value: 0.23); dipropylene glycol ether such as dipropylene glycol monomethyl ether (ClogP value: 0.09), dipropylene glycol monopropyl ether (ClogP value: 0.75), dipropylene glycol monobutyl ether (ClogP value: 1.28), or dipropylene glycol monohexyl ether (ClogP value: 2.34); tripropylene glycol ether such as tripropylene glycol monomethyl ether (ClogP value: -0.03) or tripropylene glycol monobutyl ether (ClogP value: 1.42); and alkanediol such as 1,2-butanediol (ClogP value: -0.53), 1,2-pentanediol (ClogP value: 0), or 1,2-hexanediol (ClogP value: 0.53).

It is preferable that the solvent species A includes at least one selected from the group consisting of ethylene glycol monohexyl ether, diethylene glycol monoethyl ether, diethylene glycol monoisopropyl ether, diethylene glycol monobutyl ether, diethylene glycol monoisobutyl ether, propylene glycol monomethyl ether, propylene glycol monoethyl ether, propylene glycol monopropyl ether, propylene glycol monobutyl ether, 1,2-butanediol, 1,2-pentanediol, and 1,2-hexanediol.

From the viewpoint of the graininess of an image, the content of the solvent species A is preferably in a range of 1% by mass to 30% by mass, more preferably in a range of 2% by mass to 20% by mass, and still more preferably in a range of 3% by mass to 15% by mass with respect to the total amount of the first ink.

In the first ink, in a case where the sum of the products of the ClogP of the solvent species A and the content of the solvent species A with respect to the total amount of the ink in units of % by mass (that is, Σ(content × ClogP); hereinafter, also simply referred to as "content × ClogP") is calculated, the sum of the products is preferably -10.00 or greater and 12.00 or less, more preferably -10.00 or greater and 10.00 or less, and still more preferably -8.00 or greater and 8.00 or less.

In a case where the sum of the products is -10.00 or greater and 12.00 or less, the graininess of the image is further improved.

### (Solvent species other than solvent species A)

The organic solvent in the first ink may include a solvent species other than the solvent species A.

Examples of the solvent species other than the solvent species A include a solvent species having a ClogP value of less than -0.60, such as propylene glycol (ClogP value: -1.06), ethylene glycol monomethyl ether (ClogP value: -0.61), diethylene glycol (ClogP value: -1.30), diethylene glycol monomethyl ether (ClogP value: -0.78), triethylene glycol (ClogP value: -1.48), triethylene glycol monomethyl ether (ClogP value: -0.96), or dipropylene glycol (ClogP value: -0.69).

Examples of the solvent species other than the solvent species A include a compound which is not represented by Formula (1) or Formula (2), such as 1,6-hexanediol, 1,4-hexanediol, 1,3-butanediol, or 2,4-pentanediol.

From the viewpoint of the resolution of an image, the solvent species other than the solvent species A is preferably a solvent species B represented by Formula (1) or Formula (2) and having a ClogP value of -2.00 or greater and less than -0.60 and more preferably propylene glycol, diethylene glycol, or dipropylene glycol. Among these, from the viewpoint of reducing a drying load, propylene glycol is particularly preferable.

From the viewpoint of the resolution of an image, the content of the solvent species B is preferably in a range of 1% by mass to 30% by mass, more preferably in a range of 5% by mass to 30% by mass, and still more preferably in a range of 10% by mass to 25% by mass with respect to the total amount of the first ink.

### <Surfactant>

The first ink contains a surfactant.

The surfactant in the first ink includes an acetylene-based surfactant (A) (hereinafter, also simply referred to as "surfactant (A)"), a polyoxyethylene alkyl ether-based surfactant (B) having an HLB value of 4.0 or greater and 18.0 or less (hereinafter, also simply referred to as "surfactant (B)"), and a polyether-modified silicone-based surfactant (C) (hereinafter, also simply referred to as "surfactant (C)").

The surfactant (A) contributes to the effect of the graininess (that is, suppression of granularity).

The surfactant (B) contributes to the effects of the graininess (that is, suppression of granularity) and suppression of intercolor bleeding.

The surfactant (C) contributes to the effect of suppressing intercolor bleeding.

In the present disclosure, the HLB (hydrophile-lypophile balance) value is a value indicating the affinity of the surfactant for water and oil, which is defined by the following equation (Griffin method). HLB value = 20 × [(molecular weight of hydrophilic group contained in surfactant)/(molecular weight of surfactant)]

Examples of the hydrophilic group contained in the surfactant include a hydroxyl group and an ethyleneoxy group.

### (Acetylene-based surfactant (A))

The first ink may contain only one or two or more kinds of acetylene-based surfactants (A).

A compound represented by Formula (A1) is preferable as the acetylene-based surfactant (A).

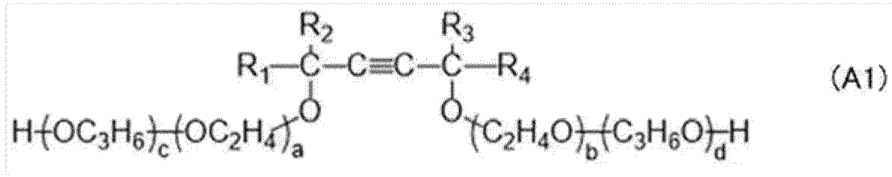

In Formula (A1), R₁ and R₄ each independently represent an alkyl group having 3 to 10 carbon atoms, and R₂ and R₃ each independently represent a methyl group or an ethyl group. a, b, c, and d represent an average addition mole number of each unit and are respectively in a range of 0 to 50.

Suitable examples of the acetylene-based surfactant (A) include acetylene glycol selected from the group consisting of 2,4,7,9-tetramethyl-5-decyne-4,7-diol, 3,6-dimethyl-4-octyne-3,6-diol, 2,5,6,11-tetramethyl-6-dodecyne-5,8-diol, 2,5-dimethyl-3-hexyne-2,5-diol, and 2,5,8,11-tetramethyl-6-dodecyne-5,8-diol, and an ethylene oxide adduct of the acetylene glycol.

The acetylene-based surfactant (A) can be synthesized, for example, by reacting acetylene with a ketone or an aldehyde corresponding to the target acetylene glycol. The acetylene-based surfactant (A) can be obtained, for example, by the method described in "Introduction of New Surfactants" (published by Sanyo Chemical Industries, Ltd., completely revised edition, 1992) written by Takehiko Fujimoto, pp. 94 to 107.

It is preferable that the acetylene-based surfactant (A) includes an acetylene-based surfactant having an HLB value of 3.0 to 9.0 (preferably 3.5 to 9.0).

In a case where the acetylene-based surfactant (A) includes an acetylene-based surfactant having an HLB value of 3.0 or greater, the resolution of the image is further improved.

In a case where the acetylene-based surfactant (A) includes an acetylene-based surfactant having an HLB value of 9.0 or less, the graininess of the image is further improved.

A commercially available product may be used as the acetylene-based surfactant (A).

Examples of the commercially available product of the acetylene-based surfactant (A) include acetylene-based surfactants (manufactured by Nissin Chemical Co., Ltd.).

Examples of the acetylene-based surfactant (manufactured by Nisshin Chemical Co., Ltd.) include SURFYNOL 104E (HLB value: 4.0), SURFYNOL 104H (HLB value: 4.0), SURFYNOL 104A (HLB value: 4.0), SURFYNOL 104PA (HLB value: 4.0), SURFYNOL 104PG-50 (HLB value: 4.0), SURFYNOL 104S (HLB value: 4.0), SURFYNOL 420 (HLB value: 4.0), SURFYNOL 440 (HLB value: 8.0), SURFYNOL SE (HLB value: 6.0), SURFYNOL SE-F (HLB value: 6.0), SURFYNOL 61 (HLB value: 6.0), SURFYNOL 82 (HLB value: 4.0), SURFYNOL DF110D (HLB value: 3.0), DYNOL 604 (HLB value: 8.0), DYNOL 607 (HLB value: 8.0), SURFYNOL 2502 (HLB value: 8.0), SURFYNOL TG (HLB value: 9.0), and OLFINE E1004 (HLB value: 7.0 to 9.0).

From the viewpoint of suppressing the granularity of the image, the content of the acetylene-based surfactant (A) is preferably in a range of 0.05% by mass to 2.5% by mass, more preferably in a range of 0.1% by mass to 2.0% by mass, and still more preferably in a range of 0.2% by mass to 1.5% by mass with respect to the total amount of the first ink.

### (Polyoxyethylene alkyl ether-based surfactant (B) having HLB value of 4 or greater and 18 or less)

The first ink contains a polyoxyethylene alkyl ether-based surfactant (B) having an HLB value of 4 or greater and 18 or less.

The first ink may contain only one or two or more kinds of the surfactants (B).

A compound represented by Formula (B1) is preferable as the surfactant (B).

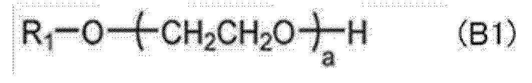

In Formula (B1), R₁ represents a hydrocarbon group, and a represents an integer of 1 to 60.

The hydrocarbon group represented by R₁ in Formula (B1) may be linear or branched.

The number of carbon atoms in the hydrocarbon group represented by R₁ in Formula (B1) is preferably 6 or more and 24 or less and more preferably 10 or more and 20 or less.

A commercially available product may be used as the surfactant (B).

Examples of the commercially available product of the surfactant (B) include EMULGEN 102KG, EMULGEN 103, EMULGEN 104P, EMULGEN 105, EMULGEN 106, EMULGEN 108, EMULGEN 109P, EMULGEN 1108, EMULGEN 120, EMULGEN 123P, EMULGEN 130K, EMULGEN 147, EMULGEN 210P, EMULGEN 220, EMULGEN 306P, EMULGEN 320P, EMULGEN 350, EMULGEN 404, EMULGEN 408, EMULGEN 409P, EMULGEN 420, EMULGEN 430, EMULGEN 705, EMULGEN 707, EMULGEN 709, and EMULGEN 1118S-70 (all manufactured by Kao Corporation); and NAROACTY ID-40, NAROACTY ID-60, NAROACTY ID-70, NAROACTY CL-40, NAROACTY CL-50, NAROACTY CL-70, NAROACTY CL-85, NAROACTY CL-95, NAROACTY CL-100, NAROACTY CL-120, NAROACTY CL-140, NAROACTY CL-160, NAROACTY CL-200, SANNONIC DE-70, SANNONIC FN-80, SANNONIC FN-100, SANNONIC FN-140, SANNONIC SS-30, SANNONIC SS-50, SANNONIC SS-70, SANNONIC SS-90, SANNONIC SS-120, SEDORAN FF-180, SEDORAN FF-200, SEDORAN FF-210, SEDORAN FF-220, SEDORAN SF-506, EMULMIN FL-80, EMULMIN FL-100, EMULMIN HL-100, EMULMIN NL-70, EMULMIN NL-80, EMULMIN NL-90, EMULMIN NL-100, EMULMIN NL-110, EMULMIN 40S, EMULMIN 40, EMULMIN 50, EMULMIN 60, EMULMIN 70, EMULMIN 110, EMULMIN 140, EMULMIN 180, EMULMIN 200, EMULMIN 240, EMULMIN CC-100, EMULMIN CC-130, EMULMIN CC-150, EMULMIN CC-200, EMULMIN CC-290, EMULMIN CO-50, EMULMIN CO-100, and EMULMIN CO-200 (all manufactured by Sanyo Chemical Industries, Ltd.).

From the viewpoint of suppressing the granularity of the image, the content of the acetylene-based surfactant (B) is preferably in a range of 0.05% by mass to 2.5% by mass, more preferably in a range of 0.1% by mass to 2.0% by mass, and still more preferably in a range of 0.2% by mass to 1.5% by mass with respect to the total amount of the first ink.

The total content of the above-described surfactant (A) and the above-described surfactant (B) (hereinafter, also referred to as the content [(A) + (B)]) in the first ink is preferably in a range of 1.0% by mass to 4.0% by mass, more preferably in a range of 1.0% by mass to 3.0% by mass, and still more preferably in a range of 1.2% by mass to 3.0% by mass with respect to the total amount of the first ink.

In a case where the content [(A) + (B)] is 1.0% by mass or greater, the graininess (that is, the granularity suppression property) of the image is further improved.

In a case where the content [(A) + (B)] is 3.0% by mass or less, the resolution of the image is further improved.

### (Polyether-modified silicone-based surfactant (C))

The first ink contains a polyether-modified silicone-based surfactant (C).

The first ink may contain only one or two or more kinds of the surfactants (C).

A compound represented by Formula (C1) is preferable as the surfactant (C).

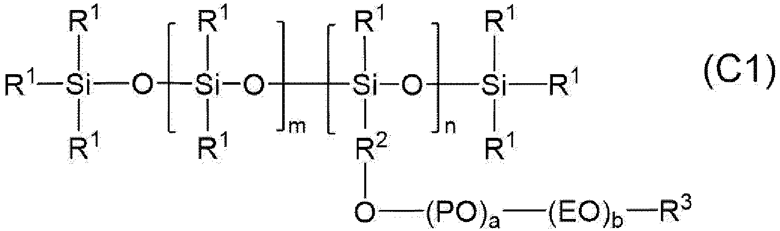

In Formula (D1), R¹'s each independently represent an alkyl group having 1 to 3 carbon atoms or a hydroxy group, R² represents an alkanediyl group having 2 to 5 carbon atoms, R³ represents a hydrogen atom, an alkyl group having 1 to 3 carbon atoms, or a hydroxy group, PO represents a propyleneoxy group, and EO represents an ethyleneoxy group. a, b, m, and n represent an average addition mole number of each unit, where a is in a range of 0 to 10, b is in a range of 1 to 50, m is in a range of 1 to 500, and n is in a range of 1 to 50.

Further, in Formula (C1), the alignment of PO and EO may be an alignment of block copolymers or an alignment of random copolymers.

In Formula (C1), the alignment of a structural unit with a subscript m and a structural unit with a subscript n may be an alignment of block copolymers or an alignment of random copolymers.

R¹ represents preferably an alkyl group having 1 to 3 carbon atoms and more preferably a methyl group.

R² represents preferably an alkanediyl group having 3 or 4 carbon atoms and more preferably a trimethylene group.

R³ represents preferably an alkyl group having 1 to 3 carbon atoms and more preferably a methyl group.

It is more preferable that a is 0, b is in a range of 1 to 15, m is in a range of 1 to 10, and n is in a range of 1 to 5. Further, it is still more preferable that a is 0, b is in a range of 3 to 10, m is in a range of 1 to 3, and n is in a range of 1 to 3.

A commercially available product may be used as the surfactant (C).

Examples of the commercially available product of the surfactant (C) include BYK-302, BYK-307, BYK-331, BYK-333, BYK-345, BYK-347, BYK-348, BYK-349, BYK-378, BYK-3400, BYK-3450, BYK-3451, BYK-3455, and BYK-3760 (all manufactured by BYK-Chemie GmbH), and KF-351A, KF-352A, KF-353, KF-354L, KF-355A, KF-615A, KF-945, KF-640, KF-642, KF-643, KF-644, KF-6011, KF-6012, KF-6015, KF-6017, and KF-6020 (all manufactured by Evonik Industries AG).

From the viewpoint of suppressing intercolor bleeding, the content of the surfactant (C) is preferably in a range of 0.03% by mass to 2.0% by mass, more preferably in a range of 0.05% by mass to 1.5% by mass, and still more preferably in a range of 0.1% by mass to 1.0% by mass with respect to the total amount of the first ink.

In the first ink, the value obtained by dividing the total content (% by mass) of the surfactant (A) and the surfactant (B) by the content (% by mass) of the surfactant (C) (hereinafter, also referred to as the content [(A) + (B)]/(C)]) is preferably in a range of 2.0 to 30.0, more preferably in a range of 2.5 to 10.0, and still more preferably in a range of 2.5 to 7.0.

In a case where the content [(A) + (B)]/(C)] is 2.0 or greater, the graininess of the image (that is, the granularity suppression property) is further improved.

In a case where the content [(A) + (B)]/(C)] is 30.0 or less, the graininess (that is, the granularity suppression property) and the resolution of the image are further improved.

### <Wax particles>

The first ink contains at least one kind of wax particles.

The wax particles contribute to the rub resistance of the image.

As the wax particles, particles consisting of a known wax can be used without particular limitation.

The preferable forms of the wax particles can refer to the description in paragraphs 0154 to 0170 of JP2011-162692A.

Examples of the wax constituting the wax particles include a natural wax and a synthetic wax.

Examples of the natural wax include petroleum-based waxes, plant-based waxes, and animal-based waxes.

Examples of the petroleum-based waxes include paraffin wax, microcrystalline wax, and petrolatum.

Examples of the plant-based waxes include carnauba wax, candelilla wax, rice bran wax, and Japan wax.

Examples of the animal-based waxes include lanolin and beeswax.

Examples of the synthetic waxes include synthetic hydrocarbon-based waxes and modified waxes.

Examples of the synthetic hydrocarbon-based waxes include polyethylene wax and Fischer-Tropsch wax.

Examples of the modified waxes include a paraffin wax derivative, a montan wax derivative, a microcrystalline wax derivative, and a derivative thereof.

In the wax constituting the wax particles, the wax particles include preferably at least one selected from the group consisting of polyethylene wax and carnauba wax and more preferably carnauba wax from the viewpoint of further improving the rub resistance of the image.

Examples of commercially available products of the wax particles include SELOSOL 524, TRASOL CN, TRASOL PF60, POLYRON L-787, and POLYRON P-502 (all manufactured by Chukyo Yushi Co., Ltd.), ITOHWAX E-210 (manufactured by Ito Oil Chemicals Co., Ltd.), NOPCOAT PEM17 (manufactured by San Nopco Ltd.), and AQUACER 515 (manufactured by BYK-Chemie GmbH).

Further, examples of the wax particles also include an ester A described in paragraph 0254 of JP2011-162692A.

Among these, the carnauba wax is SELOSOL 524 and TRASOL CN.

From the viewpoint of the rub resistance of the image, the melting point of the wax constituting the wax particles is preferably 40°C or higher and 150°C or lower and more preferably 45°C or higher and 100°C or lower.

From the viewpoint of the resolution of the image, the content of the wax particles is preferably in a range of 0.01% by mass to 20% by mass, more preferably in a range of 0.1% by mass to 10% by mass, and still more preferably in a range of 0.5% by mass to 5% by mass with respect to the total amount of the first ink.

### <Resin particles>

It is preferable that the first ink contains at least one kind of resin particles.

In this manner, the rub resistance of the image is further improved.

The resin particles contain a resin and may contain a core material or the like other than the resin, but it is preferable that the resin particles consist of only the resin.

As the resin particles, particles consisting of an acrylic resin, particles consisting of a polyester resin, particles consisting of a polyurethane resin, or particles consisting of a polyolefin resin are preferable, and particles consisting of an acrylic resin are more preferable.

In the present disclosure, the term "acrylic resin" denotes a resin having at least one of a structural unit derived from (meth)acrylic acid or a structural unit derived from (meth)acrylate.

The term "acrylic resin" may have a structural unit other than the structural unit derived from (meth)acrylic acid and the structural unit derived from (meth)acrylate.

The resin particles may refer to, for example, paragraphs 0038 to 0114 of WO2021/192720A and paragraphs 0109 to 0120 of JP2015-25076A.

From the viewpoint of further improving the rub resistance of the image, the glass transition temperature (Tg) of the resin particles is preferably in a range of 90°C to 250°C and more preferably in a range of 100°C to 230°C.

Here, a measurement Tg obtained by actual measurement is employed as the glass transition temperature (Tg) of the resin particles. A method of measuring the measurement Tg can refer to paragraph 0111 of JP2015-25076A.

The content of the resin particles is preferably in a range of 0% by mass to 10% by mass and more preferably in a range of 0.5% by mass to 7% by mass with respect to the total amount of the first ink.

Further, in a case where the first ink contains resin particles, the content mass ratio of the resin particles to the wax particles (resin particles:wax particles) is preferably in a range of 1:5 to 5:1 (solid content ratio). In a case where the content mass ratio is in the above-described range, the rub resistance of the image is more excellent.

The first ink in a case of containing resin particles may be prepared by using a commercially available resin emulsion (that is, an aqueous dispersion liquid of resin particles).

Examples of the commercially available resin emulsion include A-810 (Sansui Co., Ltd.), A-995 (Sansui Co., Ltd.), HIROS X·NE-2186 (SEIKO PMC CORPORATION), HIROS X·TE-1048 (SEIKO PMC CORPORATION), SAIVINOL SK-202 (Saiden Chemical Industry Co., Ltd.), TOCRYL W-1048 (TOYOCHEM CO., LTD.), WC-M-1217 (Arakawa Chemical industries, Ltd.), WC-M-1219 (Arakawa Chemical industries, Ltd.), N985 (A)-1 (Emulsion Technology Co., Ltd.), Neocryl A-1105 (DSM Coating Resins Ltd.), ACRIT SE-810A, ACRIT SE-953A-2, ACRIT SE-1658F, ACRIT SE-2974F, ACRIT SE-2978F (Taisei Fine Chemical Co., Ltd.), LACSTAR 7132-C (DIC Corporation), ST200 (Nippon Shokubai Co., Ltd.), and MOVINYL 972 (Japan Coating Resin Co., Ltd.).

### <Colorant>

It is preferable that the first ink contains a colorant.

Examples of the colorant include a dye and a pigment. Among the examples, from the viewpoint of durability such as heat resistance, light fasstness, and water resistance, a pigment is preferable as the colorant.

In a case where a pigment is used as the colorant, the ink can contain the pigment as a pigment dispersion liquid. The pigment dispersion liquid is a liquid obtained by dispersing the pigment in a liquid medium using a dispersing agent, and contains at least the pigment, the dispersing agent, and the liquid medium. The details of the dispersing agent will be described later. Further, the liquid medium may be water or an organic solvent.

In addition, the pigment may be an organic pigment or an inorganic pigment.

Examples of the organic pigment include an azo pigment, a polycyclic pigment, a chelate dye, a nitro pigment, a nitroso pigment, and aniline black. Among these, an azo pigment or a polycyclic pigment is preferable as the organic pigment.

Examples of the azo pigment include azo lake, an insoluble azo pigment, a condensed azo pigment, and a chelated azo pigment.

Examples of the polycyclic pigment include a phthalocyanine pigment, a perylene pigment, a perinone pigment, an anthraquinone pigment, a quinacridone pigment, a dioxazine pigment, an indigo pigment, a thioindigo pigment, an isoindolinone pigment, and a quinophthalone pigment.

Examples of the chelate dye include a basic dye-type chelate and an acid dye-type chelate.

Examples of the inorganic pigment include titanium oxide, iron oxide, calcium carbonate, barium sulfate, aluminum hydroxide, barium yellow, cadmium red, chrome yellow, and carbon black.

Examples of the pigment include pigments described in "Encyclopedia of Pigments" edited by Seishiro Ito (2000), "Industrial Organic Pigments", W. Herbst, K. Hunger, JP2002-12607A, JP2002-188025A, JP2003-26978A, and JP2003-342503A.

The volume average particle diameter of the pigment is preferably in a range of 10 nm to 200 nm, more preferably in a range of 10 nm to 150 nm, and still more preferably in a range of 10 nm to 100 nm. In a case where the volume average particle diameter thereof is 200 nm or less, the color reproducibility is satisfactory, and the jettability is improved in a case where an image is recorded by an ink jet recording method. In a case where the volume average particle diameter is 10 nm or greater, the light fastness is satisfactory.

Further, the particle size distribution of the pigment is not particularly limited, and may be any of a wide particle size distribution or a monodispersed particle size distribution. In addition, two or more pigments having a monodispersed particle size distribution may be used in the form of a mixture.

The volume average particle diameter and the particle size distribution of the pigment are values measured by a particle size distribution measuring device (for example, MICROTRAC UPA (registered trademark) EX150, manufactured by Nikkiso Co., Ltd.).

The content of the colorant is preferably in a range of 1% by mass to 20% by mass and more preferably in a range of 1% by mass to 10% by mass with respect to the total amount of the first ink.

### <Pigment dispersing agent>

In a case where the first ink contains a pigment, it is preferable that the first ink contains a pigment dispersing agent in order to disperse the pigment in water. In the present disclosure, the pigment dispersing agent is a compound having a function of dispersing the pigment. The pigment dispersing agent is adsorbed on the surface of the pigment and applied to at least a part of the surface of the pigment, and thus the pigment can be dispersed in water.

Further, in a case where a self-dispersing pigment that can be dispersed in water even in the absence of a pigment dispersing agent is used as the white pigment, the ink may not contain a pigment dispersing agent.

The form of the pigment dispersing agent contained in the first ink is not particularly limited, and may be any of a random resin, a block resin, or a graft resin. In addition, the pigment dispersing agent may be a resin having a crosslinking structure. Among these, it is preferable that the pigment dispersing agent is a resin having a crosslinking structure. It is considered that in a case where the pigment dispersing agent is a resin having a crosslinking structure, the pigment dispersing agent is unlikely to be released from the surface of the pigment, and thus the dispersion stability of the pigment is high.

In the present disclosure, the resin denotes a compound having a weight-average molecular weight of 1000 or greater.

In the present disclosure, the weight-average molecular weight (Mw) denotes a value measured by gel permeation chromatography (GPC). The measurement according to gel permeation chromatography (GPC) is performed using HLC (registered trademark)-8020GPC (manufactured by Tosoh Corporation) as a measuring device, three columns of TSKgel (registered trademark) Super Multipore HZ-H (manufactured by Tosoh Corporation, 4.6 mmID × 15 cm), and tetrahydrofuran (THF) as an eluent. Further, the measurement is performed under measurement conditions of a sample concentration of 0.45% by mass, a flow rate of 0.35 ml/min, a sample injection volume of 10 µl, and a measurement temperature of 40°C using an RI detector. Further, the calibration curve is prepared using eight samples of "F-40", "F-20", "F-4", "F-1", "A-5000", "A-2500", "A-1000", and "n-propylbenzene" which are "Standard Samples TSK standard, polystyrene" (manufactured by Tosoh Corporation).

The resin having a crosslinking structure is not particularly limited as long as the resin has at least one crosslinking structure in a molecule.

Whether or not the resin contained in the ink has a crosslinking structure can be determined by, for example, the following method. First, the resin is separated from the ink by using a separation method such as solvent extraction. The presence or absence of the crosslinking structure can be comprehensively determined by analyzing the separated resin using various analysis methods such as a nuclear magnetic resonance method (NMR), an infrared spectroscopy method (IR), and a thermal analysis method.

The resin having a crosslinking structure (hereinafter, also referred to as "crosslinked resin") is formed, for example, by crosslinking an uncrosslinked resin (hereinafter, also referred to as "uncrosslinked resin") with a crosslinking agent. It is preferable that the uncrosslinked resin is a water-soluble resin.

In the present disclosure, the term "water-soluble" indicates a property in which 1 g or greater of a substance is dissolved in 100 g of water at 25°C. As the term "water-soluble" property, a property in which 3 g or greater (more preferably 10 g or greater) of a substance is dissolved in 100 g of water at 25°C is preferable.

Even in a case where the uncrosslinked resin is water-soluble, the crosslinked resin is not necessarily water-soluble.

Examples of the uncrosslinked resin include a vinyl resin, an acrylic resin, a urethane resin, and a polyester resin. Among these, an acrylic resin is preferable as the uncrosslinked resin.

It is preferable that the uncrosslinked resin is a resin containing a functional group capable of being crosslinked with a crosslinking agent. Examples of the crosslinkable functional group include a carboxy group or a salt thereof, an isocyanate group, and an epoxy group. Among these, from the viewpoint of improving the dispersibility of the pigment, a carboxy group or a salt thereof is preferable, and a carboxy group is particularly preferable as the crosslinkable functional group. That is, it is preferable that the uncrosslinked resin is a resin containing a carboxy group.

It is preferable that the uncrosslinked resin is a copolymer having a structural unit derived from a monomer containing a carboxy group (hereinafter, referred to as "carboxy group-containing monomer"). The structural unit derived from a carboxy group-containing monomer contained in a copolymer may be used alone or two or more kinds thereof. The copolymer may be a random copolymer or a block copolymer, but is preferably a random copolymer.

Examples of the carboxy group-containing monomer include (meth)acrylic acid, β-carboxyethyl acrylate, fumaric acid, itaconic acid, maleic acid, and crotonic acid.

From the viewpoints of the crosslinking properties and the dispersibility, (meth)acrylic acid or β-carboxyethyl acrylate is preferable, and (meth)acrylic acid is more preferable as the carboxy group-containing monomer.

The content of the structural unit derived from a carboxy group-containing monomer is preferably in a range of 5% by mass to 40% by mass, more preferably in a range of 10% by mass to 35% by mass, and still more preferably in a range of 10% by mass to 30% by mass with respect to the total amount of the uncrosslinked resin.

It is preferable that the uncrosslinked resin has a structural unit derived from a hydrophobic monomer in addition to the structural unit derived from a carboxy group-containing monomer. The structural unit derived from a hydrophobic monomer contained in the copolymer may be used alone or two or more kinds thereof.

Examples of the hydrophobic monomer include (meth)acrylate containing an alkyl group having 1 to 20 carbon atoms, (meth)acrylate having an aromatic ring (such as benzyl (meth)acrylate or phenoxyethyl (meth)acrylate), styrene, and a styrene derivative.

The content of the structural unit derived from a hydrophobic monomer is preferably in a range of 60% by mass to 95% by mass, more preferably in a range of 65% by mass to 90% by mass, and still more preferably in a range of 70% by mass to 90% by mass with respect to the total amount of the uncrosslinked resin.

The uncrosslinked resin is preferably a random copolymer having a structural unit derived from a carboxy group-containing monomer and at least one of a structural unit derived from a (meth)acrylate containing an alkyl group having 1 to 20 carbon atoms or a structural unit derived from a (meth)acrylate having an aromatic ring, more preferably a random copolymer having a structural unit derived from (meth)acrylic acid and a structural unit derived from a (meth)acrylate having an aromatic ring, and still more preferably a copolymer having a structural unit derived from (meth)acrylic acid and a structural unit derived from benzyl (meth)acrylate.

The weight-average molecular weight (Mw) of the uncrosslinked resin is not particularly limited, but is preferably in a range of 3,000 to 300,000, more preferably in a range of 5,000 to 200,000, and still more preferably in a range of 7,000 to 100,000 from the viewpoint of the dispersibility of a white pigment.

The preferable ranges of the weight-average molecular weight of the crosslinked resin are the same as the preferable ranges of the weight-average molecular weight of the uncrosslinked resin.

In the present disclosure, the weight-average molecular weight (Mw) is measured by gel permeation chromatography (GPC). The measurement according to GPC is performed by connecting three columns of TSKgeL Super HZM-H, TSKgeL Super HZ4000, and TSKgel Super HZ2000 (all trade names, manufactured by Tosoh Corporation) in series using HLC-8220GPC (manufactured by Tosoh Corporation) and tetrahydrofuran (THF) as an eluent. Further, the measurement is performed under conditions of a sample concentration of 0.45% by mass, a flow rate of 0.35 ml/min, a sample injection volume of 10 µl, and a measurement temperature of 40°C using a differential refractive index detector. Further, the calibration curve is prepared using eight samples of "F-40", "F-20", "F-4", "F-1", "A-5000", "A-2500", "A-1000", and "n-propylbenzene" which are "Standard Samples TSK standard, polystyrene" (manufactured by Tosoh Corporation).

It is preferable that the crosslinking agent used in a case of crosslinking the uncrosslinked resin is a compound having two or more reaction sites with the uncrosslinked resin (for example, a resin containing a carboxy group). The crosslinking agent may be used alone or in combination of two or more kinds thereof.

As a combination of the crosslinking agent and the uncrosslinked resin, a combination of a compound containing two or more epoxy groups (that is, a bifunctional or higher functional epoxy compound) and a resin containing a carboxy group is preferable. In this combination, a crosslinking structure is formed by the reaction between the epoxy group and the carboxy group. It is preferable that the crosslinking structure is formed by the crosslinking agent after the pigment is dispersed by the uncrosslinked resin.

Examples of the bi- or higher functional epoxy compound include ethylene glycol diglycidyl ether, polyethylene glycol diglycidyl ether, 1,6-hexanediol diglycidyl ether, diethylene glycol diglycidyl ether, polyethylene glycol diglycidyl ether, dipropylene glycol diglycidyl ether, polypropylene glycol diglycidyl ether, and trimethylolpropane triglycidyl ether.

Among these, polyethylene glycol diglycidyl ether, diethylene glycol diglycidyl ether, or trimethylolpropane triglycidyl ether is preferable as the bi- or higher functional epoxy compound.

Commercially available products may be used as the crosslinking agent.

Examples of the commercially available products include Denacol EX-321, EX-821, EX-830, EX-850, and EX-851 (manufactured by Nagase ChemteX Corporation).

From the viewpoints of the crosslinking reaction rate and the dispersion stability after crosslinking, the molar ratio between a reaction site (for example, an epoxy group) in the crosslinking agent and a reaction site (for example, a carboxy group) in the uncrosslinked resin is preferably in a range of 1:1.1 to 1:10, more preferably in a range of 1:1.1 to 1:5, and still more preferably in a range of 1:1.1 to 1:3.

The mixing ratio between the pigment and the pigment dispersing agent is preferably in a range of 1:0.02 to 1:2, more preferably in a range of 1:0.03 to 1:1.5, and still more preferably in a range of 1:0.04 to 1:1 in terms of the mass.

### <Other components>

The first ink may contain other components in addition to the above-described components as necessary.

Examples of the other components include colloidal silica, inorganic salts, solid wetting agents (urea and the like), fading inhibitors, emulsion stabilizers, penetration enhancers, ultraviolet absorbing agents, preservatives, fungicides, pH adjusters, antifoaming agents, viscosity adjusters, dispersion stabilizers, rust inhibitors, chelating agents, and water-soluble polymer compounds.

### <Physical properties of first ink>

### (Dynamic surface tension)

The dynamic surface tension of the first ink at 10 milliseconds is preferably 28.0 mN/m or greater and 39.0 mN/m or less and more preferably 29.0 mN/m or greater and 38.0 mN/m or less.

The dynamic surface tension of the first ink at 10 ms is a value closest to the dynamic surface tension at the moment of the ink droplets landing on the recording medium.

In a case where the dynamic surface tension thereof at 10 milliseconds is 39.0 mN/m or less, the graininess of the image (that is, the granularity suppression property) is further improved.

In a case where the dynamic surface tension thereof at 10 milliseconds is 29.0 mN/m or greater, the resolution of the image is further improved.

The dynamic surface tension thereof at 10 milliseconds in the present disclosure denotes a value measured using a bubble pressure type dynamic surface tensiometer.

In the examples described below, "BP100" (manufactured by KRÜSS GmbH) was used as a bubble pressure type dynamic surface tensiometer.

### (Viscosity)

The viscosity of the first ink is preferably in a range of 1.2 mPa s to 15.0 mPa·s, more preferably in a range of 2.0 mPa s to 13.0 mPa s, and still more preferably in a range of 2.5 mPa·s to 10.0 mPa·s.

The viscosity of the first ink is measured at a temperature of 30°C using a rotational viscometer, for example, "VISCOMETER TV-22" (product name, manufactured by Toki Sangyo Co., Ltd.).

### (pH)

From the viewpoint of the storage stability of the first ink, the pH of the first ink is preferably in a range of 6.0 to 11.0, more preferably in a range of 7.0 to 10.0, and still more preferably in a range of 7.0 to 9.5.

The pH of the first ink is measured at a temperature of 25°C using a pH meter, for example, "WM-50EG" (product name, manufactured by DKK-TOA Corporation).

### [Other steps]

The image recording method of the present disclosure may include other steps in addition to the above-described image recording step.

Here, from the viewpoint of increasing the speed of image recording, it is preferable that the image recording method of the present disclosure does not include a step of applying a pretreatment liquid containing an aggregating agent (for example, an organic acid, a polyvalent metal salt, a metal complex, or a cationic polymer) that aggregates components in the ink to the recording medium before application of the ink. The step of applying a pretreatment liquid can refer to, for example, the description disclosed in JP2013-180423A as the related art.

### Examples

Hereinafter, the present disclosure will be described in more detail based on examples, but the present disclosure is not limited to the following examples unless the gist thereof is overstepped.

Hereinafter, "parts" denotes "parts by mass".

The weight-average molecular weight was measured using HLC (registered trademark)-8020GPC (manufactured by Tosoh Corporation) as a measuring device, three columns of TSKgel (registered trademark), Super Multipore, HZ-H (manufactured by Tosoh Corporation, 4.6 mmID × 15 cm), and tetrahydrofuran (THF) as an eluent. Further, the measurement was performed under measurement conditions of a sample concentration of 0.45% by mass, a flow rate of 0.35 ml/min, a sample injection volume of 10 µL, and a measurement temperature of 40°C using an RI detector. Further, the calibration curve was prepared using eight samples of "F-40", "F-20", "F-4", "F-1", "A-5000", "A-2500", "A-1000", and "n-propylbenzene" which are "Standard Samples TSK standard, polystyrene" (manufactured by Tosoh Corporation).

In preparation of each ink, each pigment dispersion liquid and a resin particle dispersion liquid were prepared in advance.

### <Synthesis of pigment dispersing agent>

A monomer feed composition was prepared by mixing methacrylic acid (172 parts by mass), benzyl methacrylate (828 parts by mass), and isopropanol (375 parts by mass). Further, an initiator feed composition was prepared by mixing 2,2-azobis(2-methylbutyronitrile) (22.05 parts by mass) and isopropanol (187.5 parts by mass). Next, isopropanol (187.5 parts by mass) was heated to 80°C in a nitrogen atmosphere, and a mixture of the monomer feed composition and the initiator feed composition was added dropwise thereto over 2 hours. After completion of the dropwise addition, the obtained solution was further maintained at 80°C for 4 hours and then cooled to 25°C. After cooling of the solution, the solvent was removed under reduced pressure, thereby obtaining a water-soluble polymer (methacrylic acid/benzyl methacrylate copolymer). The water-soluble polymer had a weight-average molecular weight of about 30,000 and an acid value of 112 mgKOH/g.

### <Preparation of magenta pigment dispersion liquid>

0.8 equivalents of the amount of methacrylic acid in the obtained water-soluble polymer (150 parts by mass) were neutralized with a potassium hydroxide aqueous solution. Thereafter, ion exchange water was added thereto to adjust the concentration to 25% by mass, thereby obtaining an aqueous solution of a polymer dispersing agent Q-1.

The aqueous solution (124 parts by mass) of the polymer dispersing agent Q-1, a magenta pigment (Pigment Red 122, Chromofine Red, manufactured by Dainichiseika Color & Chemicals Mfg. Co., Ltd.) (48 parts by mass), water (75 parts by mass), and dipropylene glycol (30 parts by mass) were mixed and dispersed using a beads mill (bead diameter: 0.1 mmϕ, zirconia beads) until a desired volume average particle diameter was obtained, thereby obtaining a dispersion liquid (uncrosslinked dispersion liquid) in which the magenta pigment was dispersed by the polymer dispersing agent Q-1. The pigment concentration of the magenta pigment was 15% by mass.

Trimethylolpropane polyglycidyl ether (product name, "Denacol EX-321", manufactured by Nagase ChemteX Corporation) (1.3 parts by mass) as a crosslinking agent and a boric acid aqueous solution (boric acid concentration: 4% by mass) (14.3 parts by mass) were added to this uncrosslinked dispersion liquid (136 parts by mass), and the solution was allowed to react at 50°C for 6 and a half hours and cooled to 25°C, whereby the polymer dispersing agent Q-1 was crosslinked by the crosslinking agent. In this manner, a dispersion liquid (crosslinked dispersion liquid) in which the magenta pigment was dispersed by a crosslinked resin 1 was obtained. Further, the crosslinked resin 1 is a crosslinked substance of the resin dispersing agent Q-1. Next, ion exchange water was added to the obtained crosslinked dispersion liquid, and ultrafiltration was performed using a stirring type ULTRAHOLDER (manufactured by Advantec AS) and an ultrafiltration filter (manufactured by Advantec AS, fractional molecular weight of 50,000, Q0500076E ULTRAFILTER). A magenta pigment dispersion liquid (magenta pigment concentration of 15% by mass) in which the magenta pigment was dispersed by the crosslinked resin 1 was obtained by performing purification such that the concentration of dipropylene glycol in the crosslinked dispersion liquid reached 0.1% by mass or less and performing concentration until the pigment concentration reached 15% by mass.

### Preparation of cyan pigment dispersion liquid

A cyan pigment dispersion liquid was obtained by the same method as in the preparation of the magenta pigment dispersion liquid except that Pigment Blue 15:3 (Phthalocyanine Blue-A220, manufactured by Dainichiseika Color & Chemicals Mfg. Co., Ltd.) serving as a cyan pigment was used in place of the magenta pigment.

### <Preparation of aqueous dispersion liquid of resin particles A>

A three-neck flask equipped with a stirrer, a thermometer, a reflux condenser, and a nitrogen gas introduction pipe was charged with water (250 g), 12-methacrylamidododecanoic acid (6.7 g), potassium hydrogen carbonate (0.17 g), and isopropanol (20 g) and was heated to 85°C under a nitrogen stream. Here, a mixed solution consisting of 4,4'-azobis(4-cyanovaleric acid) (radical polymerization initiator, product name, "V-501", manufactured by FUJIFILM Wako Pure Chemical Corporation) (0.11 g), potassium hydrogen carbonate (0.08 g), and water (9 g) was added thereto, and the mixture was stirred for 10 minutes. Next, a monomer solution consisting of styrene (14 g), benzyl methacrylate (14 g), methyl methacrylate (48 g), butyl methacrylate (3.3 g), and hydroxyethyl methacrylate (14 g) was added dropwise to the three-neck flask at a constant speed until the dropwise addition was completed in 3 hours. Further, a mixed solution consisting of V-501 (0.06 g), potassium hydrogen carbonate (0.04 g), and water (6 g) was added to the solution twice, immediately after the start of dropwise addition of the monomer solution and 1.5 hours after the start of dropwise addition of the monomer solution. After completion of the dropwise addition of the monomer solution, the mixed solution was stirred for 1 hour. Subsequently, a mixed solution consisting of V-501 (0.06 g), potassium hydrogen carbonate (0.04 g), and water (6 g) was added to the obtained reaction mixture, and the mixture was further stirred for 3 hours. The obtained reaction mixture was filtered through a mesh having a mesh size of 50 µm, thereby obtaining an aqueous dispersion liquid of resin particles A (concentration of solid contents: 25% by mass).

### [Example 1]

### <Preparation of cyan ink>

Each component in the following composition was mixed to obtain a mixed solution, and coarse particles were removed from the obtained mixed solution using a 1 µm filter, thereby obtaining a cyan ink (hereinafter, also referred to as "ink C").

The outline of the composition of the ink C is listed in Table 1.

The sum of the products of the ClogP of the solvent species and the content of the solvent species A with respect to the total amount of the ink in units of % by mass is also listed in the columns of "content × ClogP" in Table 1.

The dynamic surface tension of the ink C at 10 milliseconds (hereinafter, also referred to as "dynamic surface tension at 10 msec") is also listed in Table 1. The dynamic surface tension was measured using, for example, a bubble pressure type dynamic surface tension meter (product name, "BP100", manufactured by KRUSS).

### - Composition of ink C -

· Cyan pigment dispersion liquid: amount set such that concentration of cyan pigment in ink reached 3% by mass
· Diethylene glycol monoethyl ether (also referred to as "DEGmEE"; manufactured by Daicel Corporation) [organic solvent; solvent species A (ClogP value of -0.6 or greater and 2.7 or less)]: 15% by mass
· Propylene glycol (hereinafter, also referred to as "PG"; manufactured by ADEKA Corporation) [organic solvent; solvent species other than solvent species A]: 20% by mass
· Aqueous dispersion liquid of resin particles A (concentration of solid contents: 25% by mass): 2% by mass in terms of solid content (resin particles A)
· "SURFYNOL 104PG50" (manufactured by Nisshin Chemical Co., Ltd., 2,4,7,9-tetramethyl-5-decyne-4,7-diol; solid content of 50% by mass) (hereinafter, also referred to as "S104") [acetylene glycol-based surfactant (A)]: 0.5% by mass in terms of solid content
· "EMULGEN 108" (manufactured by Kao Corporation, lauryl ether in which repetition number of polyoxyethylene is 6) (hereinafter, also referred to as "EM108") [polyoxyethylene alkyl ether-based surfactant (B)]: 1.0% by mass
· "BYK-345" (manufactured by BYK-Chemie GmbH, compound in which in Formula (C1), a represents 0, b represents 5.9, m represents 1.8, and n represents 1) (hereinafter, also referred to as "BYK345") [silicone-based surfactant (C)]: 0.4% by mass
· Carnauba wax (manufactured by Chukyo Yushi Co., Ltd., "TRASOL CN"; solid content of 30% by mass) (hereinafter, also referred to as "Carnauba") [wax particles]: 1.5% by mass in terms of solid content
· Urea (manufactured by Nissan Chemical Corporation): 2% by mass
· Water: remaining amount set such that total amount of composition was 100% by mass

### <Preparation of magenta ink>

A magenta ink (hereinafter, also referred to as "ink M") was prepared in the same manner as in the preparation of the ink C except that the cyan pigment dispersion liquid (the amount set such that the concentration of the cyan pigment in the ink was 3% by mass) was changed to a magenta pigment dispersion liquid (the amount such that the concentration of the magenta pigment in the ink was 3% by mass).

The outline of the composition of the ink M is listed in Table 1.

The sum of the products of the ClogP of the solvent species and the content of the solvent species A with respect to the total amount of the ink in units of % by mass is also listed in the columns of "content × ClogP" in Table 1.

The dynamic surface tension of the ink M at 10 msec (that is, the dynamic surface tension at 10 msec) is also listed in Table 1. The dynamic surface tension was measured using, for example, a bubble pressure type dynamic surface tension meter (product name, "BP100", manufactured by KRUSS).

The image recording was performed using the ink C as the first ink and the ink M as the second ink.

Hereinafter, the details will be described.

### <Preparation of image recording device>

An image recording device having the configuration of the above-described recording device A was prepared as an image recording device.

That is, the image recording device used in the present example is an image recording device including a transport mechanism that transports a recording medium in a state in which the recording medium is placed on a stage, a first ink jet head that jets the first ink, a second ink jet head that jets the second ink, and a drying zone that includes a drying unit for drying the first ink and the second ink, in which the first inkjet head, the second inkjet head, and the drying zone are arranged in this order in the transport direction of the recording medium.

As both the first ink jet head and the second ink jet head, an ink jet head (product name "1200 dpi high image quality model KJ4B-1200", manufactured by Kyocera Corporation) was used.

The disposition of both the first ink jet head and the second ink jet head was a disposition in which the arrangement direction of nozzles in the inkjet head was orthogonal to the transport direction of the recording medium.

The first ink jet head was used to jet the ink C as the first ink, and the second ink jet head was used to jet the ink M as the second ink.

The drying zone was a zone where the image recording surface of the recording medium was placed on a drum in a state of facing upward at 130°C and the image recording surface was dried with hot air at 130°C for 1.5 seconds in this state.

### <Image recording>

A recording medium (product name "OK TOP COAT", 104 gsm, manufactured by OJI PAPER CO., LTD.) was fixed on a stage in an environment with a temperature of 32°C ± 1°C and a relative humidity of 30% ± 5%, and an ink jet head (product name "1200 dpi high image quality model KJ4B-1200", manufactured by Kyocera Corporation) was filled with the first ink and the second ink.

The recording medium was transported at a transportation speed listed in Table 1, the first ink was jetted from the first ink jet head and applied to the transported recording medium, the second ink was jetted from the second ink jet head and applied to the recording medium to which the first ink had been applied, and the first ink and the second ink in the recording medium to which the first ink and the second ink had been applied were dried in the drying zone to record various images.

Here, the difference T1 in landing time between the first ink and the second ink and the time T2 from the landing of the second ink to the heating and drying were respectively adjusted to the values listed in Table 1. The adjustment of T1 and T2 was performed by adjusting at least one of the interval between the first ink jet head and the second ink jet head, the interval between the second inkjet head and the drying zone, or the transportation speed of the recording medium.

### <Evaluation>

The following various images were recorded under the conditions for image recording, and the following evaluations were performed.

The results are listed in Table 1.

### (Graininess)

A square image having one side with a length of 3 cm was recorded as an image B (that is, a blue image, the same applies hereinafter) by applying the ink C onto the recording medium in the form of a square pattern having one side with a length of 3 cm and applying the ink M onto the ink C applied in the form of the square pattern in an overlapping manner.

The above-described square image was recorded under the conditions of every 10 duty from 10% duty to 100% duty (that is, a total of 10 kinds of images).

Here, 100% duty denotes an image recorded under the condition of applying one droplet of 2.1 pL of ink to one pixel (unit area of (1/1200) inches × (1/1200) inches) at a resolution of 1200 dpi × 1200 dpi.

The graininess of the obtained image was visually confirmed and evaluated according to the following evaluation standards.

The ranks in the following evaluation standards were determined by majority votes of five evaluators.

In the following evaluation standards, the rank of the most excellent graininess (that is, the rank of the most suppressed granularity) is A.

### - Evaluation standards for graininess -

A: Granularity was not recognized.
B: Almost no granularity was recognized.
C: Granularity was slightly recognized.
D: Granularity was significant.
E: Granularity was extremely significant.

### (Intercolor bleeding)

An image recorded material 1 for evaluating intercolor bleeding with a blue line pattern was obtained by applying the ink C in the form of a line pattern having a width of 500 µm onto the recording medium at 100% duty and applying the ink M in the form of a solid image at 100% duty to cover the ink C applied in the form of a line pattern and the periphery thereof.

In addition, an image recorded material 2 for evaluating intercolor bleeding with a blue line pattern was obtained by applying the ink C in the form of a solid pattern onto the recording medium at 100% duty and applying the ink M in the form of a line pattern with a width of 500 µm at 100% duty onto the ink C applied in the form of a solid pattern.

The widths of the line patterns of the image recorded material 1 and the image recorded material 2 were respectively measured at five sites (that is, a total of 10 sites), and the average value of the ten measurement results was calculated as the average width of the line pattern.

Based on the calculated average width of the line pattern, the intercolor bleeding was evaluated according to the following evaluation standards.

In the following evaluation standards, the rank of the most suppressed bleeding and color mixture is A.

### - Evaluation standards for intercolor bleeding -

A: The average width of the line pattern was less than 800 µm.
B: The average width of the line pattern was 800 µm or greater and less than 900 µm.
C: The average width of the line pattern was 900 µm or greater and less than 1000 µm.
D: The average width of the line pattern was 1000 µm or greater and less than 1100 µm.
E: The average width of the line pattern was 1100 µm or greater.

### (Resolution)

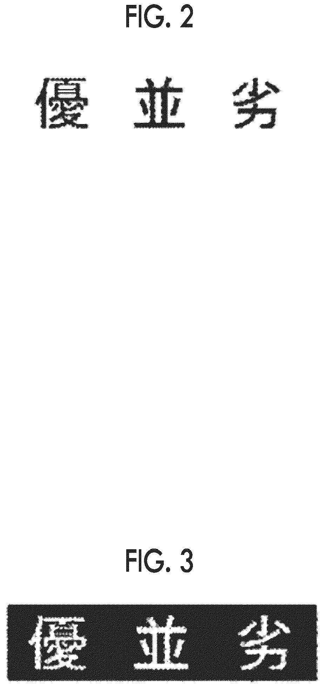

The ink C and the ink M were applied in this order on the recording medium at 30% duty in an overlapping manner, and the character image shown in Fig. 2 and the character image shown in Fig. 3 were recorded as the images B (that is, a blue image).

Each of these character images was recorded at two font sizes of 2 pt and 3 pt. Here, pt indicates the DTP point representing the font size, and 1 pt is 1/72 inch.

The above-described image recording was continuously performed over the recording medium with a length of 1000 m.

In the obtained image recorded material, the character image (that is, the character image near a length of 1000 m of the recording medium) near the character image recorded last was observed, and the resolution of the image was evaluated according to the following evaluation standards.

The ranks in the following evaluation standards were determined by majority votes of five evaluators.

In the following evaluation standards, the rank of the most excellent resolution is A.

### - Evaluation standards for resolution -

A: Image unclarity due to jetting deviation and/or satellites did not occur in both the normal characters and the outline characters.
B: Image unclarity occurred slightly in the normal characters and the outline characters due to jetting deviation and/or satellites.
C: Image unclarity occurred occasionally in both the normal characters and the outline characters due to jetting deviation and/or satellites.
D: Image collapse occurred occasionally in both the normal characters and the outline characters due to jetting deviation and/or satellites.
E: Image collapse occurred in both the normal characters and the outline characters due to jetting deviation and/or satellites, and characters that were impossible to discriminate were found.

### (Rub resistance)

The ink C was applied onto the recording medium in the form of a solid pattern, and the ink M was applied onto the applied ink C in an overlapping manner to record a solid image at 100% duty as an image B (that is, a blue image).

A paperweight having a mass of 470 g and a size of 120 mm × 30 mm × 15 mm was prepared, and OK TOP COAT (manufactured by OJI PAPER CO., LTD.) was wound around the paperweight.

The rubbing surface was set as a surface with a size of 120 mm × 15 mm (area of 1800 mm²), and the above-described image B was rubbed back and forth 10 times with the paperweight around which the OK topcoat was wound. The image B after this operation was visually observed, and the rub resistance of the image was evaluated according to the following evaluation standards.

In the following evaluation standards, the rank of the most excellent rub resistance of the image is "A".

### - Evaluation standards for rub resistance of image -

A: Peeling of the image was not visually recognized.
B: Slight peeling of the image was found in a region with an area less than 5% of the total area of the image.
C: Slight peeling of the image was found in a region with an area greater than or equal to 5% and less than 10% of the total area of the image.
D: Slight peeling of the image was found in a region with an area greater than or equal to 10% of the total area of the image.
E: Peeling of the image was clearly recognized in the image.

### [Examples 2 to 30]

The same operation as in Example 1 was performed except that the combinations of the recording conditions, the compositions of the ink C, and the compositions of the ink M were changed as listed in Tables 1 to 3.

The results thereof are listed in Tables 1 to 3.

### [Comparative Examples 1 to 4]

The same operation as in Example 1 was performed except that the combinations of the compositions of the ink C and the compositions of the ink M were changed as listed in Table 4.

The results are listed in Table 4.

### [Comparative Examples 5 and 6]

The same operation as in Example 1 was performed except that the recording conditions were changed as listed in Table 4.

The results are listed in Table 4.

In Tables 1 to 4, the numerical value of each component denotes the content of the component in units of % by mass with respect to the total amount of the ink, and "-" denotes that the corresponding component is not contained.

The numerical value of each component described by the abbreviation of the trade name of the aqueous dispersion liquid denotes the content of the active component (that is, the solid content) in the corresponding product in units of % by mass with respect to the total amount of the ink.

The ClogP value of the organic solvent and the HLB value of the polyoxyethylene alkyl ether-based surfactant (B) are respectively listed in Tables 1 to 4.

### - Abbreviations in Tables 1 to 4 -

### (Hereinafter, organic solvents as the solvent species A (ClogP value of -0.6 or greater and 2.7 or less))

- DEGmEE: diethylene glycol monoethyl ether
- DEGiPE: diethylene glycol monoisopropyl ether
- DEGmBE: diethylene glycol monobutyl ether
- DEGiBE: diethylene glycol monoisobutyl ether
- EGmHE: ethylene glycol monohexyl ether
- PGmME: propylene glycol monomethyl ether
- PGmEE: propylene glycol monoethyl ether
- PGmBE: propylene glycol monobutyl ether
- PGmPE: propylene glycol monopropyl ether
- 1,2-BG: 1,2-butanediol
- 1,2-PentG: 1,2-pentanediol
- 1,2-HDO: 1,2-hexanediol

### (Hereinafter, organic solvents other than solvent species A)

· PG: propylene glycol

### (Hereinafter, acetylene glycol-based surfactants (A))

· S104···"SURFYNOL 104PG50" (manufactured by Nissin Chemical Co., Ltd., 2,4,7,9-tetramethyl-5-decyne-4,7-diol; solid content of 50% by mass) (HLB value: 4.0)
· D604: "DYNOL 604" (manufactured by Nissin Chemical Co., Ltd., 2,5,8,11-tetramethyl-6-dodecyne-5,8-diol ethoxylate; solid content of 100% by mass) (HLB value: 8.0)
· DF110D: "SURFYNOL DF110D" (manufactured by Nissin Chemical Co., Ltd., 2,5,8,11-tetramethyl-6-dodecyne-5,8-diol; solid content of 32 mass%) (HLB value: 3.0)

### (Hereinafter, polyoxyethylene alkyl ether-based surfactants (B))

· EM103: "EMULGEN 103" (manufactured by Kao Corporation, polyoxyethylene lauryl ether)
· EM108 ... "EMULGEN 108" (manufactured by Kao Corporation, polyoxyethylene lauryl ether)

### (Hereinafter, silicone-based surfactants (C))

· BYK345: compound in which in Formula (C1), a represents 0, b represents 5.9, m represents 1.8, and n represents 1

### (Hereinafter, wax particles and resin particles)

· Carnauba: carnauba wax
· A: resin particles A

**[Table 1]**

| | | | | Example 1 | Example 2 | Example 3 | Example 4 | Example 5 | Example 6 | Example 7 | Example 8 | Example 9 | Example 10 |
|---|---|---|---|---|---|---|---|---|---|---|---|---|---|
| Recording conditions | Difference T1 in landing time (s) | | | 0.2 | 0.2 | 0.2 | 0.2 | 0.2 | 0.7 | 0.7 | 0.2 | 0.2 | 0.2 |
| | Time T2 from landing to heating and drying (s) | | | 0.6 | 0.6 | 0.6 | 0.6 | 1.3 | 0.6 | 1.8 | 0.6 | 0.6 | 0.6 |
| | Transportation speed (m/min) | | | 80 | 80 | 80 | 80 | 80 | 80 | 80 | 60 | 160 | 80 |
| | Organic solvent | Solvent species A (ClogP value of -0.6 or greater and 2.7 or less) | Type | DEGmEE | DEGmEE | DEGmEE | DEGmEE | DEGmEE | DEGmEE | DEGmEE | DEGmEE | DEGmEE | DEGmEE |
| | | | ClogP | -0.39 | -0.39 | -0.39 | -0.39 | -0.39 | -0.39 | -0.39 | -0.39 | -0.39 | -0.39 |
| | | | Content | 15 | 15 | 15 | 15 | 15 | 15 | 15 | 15 | 15 | 15 |
| | | | Content × ClogP | -5.85 | -5.85 | -5.85 | -5.85 | -5.85 | -5.85 | -5.85 | -5.85 | -5.85 | -5.85 |
| | | Solvent other than solvent species A | Type | PG | PG | PG | PG | PG | PG | PG | PG | PG | PG |
| | | | ClogP | -1.06 | -1.06 | -1.06 | -1.06 | -1.06 | -1.06 | -1.06 | -1.06 | -1.06 | -1.06 |
| Outline of ink C composition | | | Content | 20 | 20 | 20 | 20 | 20 | 20 | 20 | 20 | 20 | 20 |
| | | (A) | Type | S104 | D604 | D604 | D604 | D604 | D604 | D604 | D604 | D604 | S104 |
| | | | Content | 0.5 | 1.2 | 1.2 | 1.2 | 1.2 | 1.2 | 1.2 | 1.2 | 1.2 | 0.5 |
| | | (B) | Type | EM108 | EM108 | EM103 | EM705 | EM108 | EM108 | EM108 | EM108 | EM108 | EM108 |
| | | | HLB value | 11.7 | 11.7 | 8.3 | 10.5 | 11.7 | 11.7 | 11.7 | 11.7 | 11.7 | 11.7 |
| | Surfactant | | Content | 1.0 | 1.0 | 1.0 | 1.0 | 1.0 | 1.0 | 1.0 | 1.0 | 1.0 | 1.0 |
| | | (C) | Type | BYK345 | BYK345 | BYK345 | BYK345 | BYK345 | BYK345 | BYK345 | BYK345 | BYK345 | BYK333 |
| | | | Content | 0.4 | 0.4 | 0.4 | 0.4 | 0.4 | 0.4 | 0.4 | 0.4 | 0.4 | 0.05 |
| | | (A) + (B) | | 1.5 | 2.2 | 2.2 | 2.2 | 2.2 | 2.2 | 2.2 | 2.2 | 2.2 | 1.5 |
| | | ((A) + (B))/(C) | | 3.8 | 5.5 | 5.5 | 5.5 | 5.5 | 5.5 | 5.5 | 5.5 | 5.5 | 30.0 |
| | Wax particles | | | Carnauba | Carnauba | Carnauba | Carnauba | Carnauba | Carnauba | Carnauba | Carnauba | Carnauba | Carnauba |
| | Resin particles | | | A | A | A | A | A | A | A | A | A | A |
| Dynamic surface tension of ink C at 10 msec | | | | 36.0 | 36.4 | 35.3 | 36.4 | 36.4 | 36.4 | 36.4 | 36.4 | 36.4 | 37.5 |
| | Organic solvent | Solvent species A (ClogP value of -0.6 or greater and 2.7 or less) | Type | DEGmEE | DEGmEE | DEGmEE | DEGmEE | DEGmEE | DEGmEE | DEGmEE | DEGmEE | DEGmEE | DEGmEE |
| | | | ClogP | -0.39 | -0.39 | -0.39 | -0.39 | -0.39 | -0.39 | -0.39 | -0.39 | -0.39 | -0.39 |
| | | | Content | 15 | 15 | 15 | 15 | 15 | 15 | 15 | 15 | 15 | 15 |
| | | | Content × ClogP | -5.85 | -5.85 | -5.85 | -5.85 | -5.85 | -5.85 | -5.85 | -5.85 | -5.85 | -5.85 |
| | | Solvent other than solvent species A | Type | PG | PG | PG | PG | PG | PG | PG | PG | PG | PG |
| | | | ClogP | -1.06 | -1.06 | -1.06 | -1.06 | -1.06 | -1.06 | -1.06 | -1.06 | -1.06 | -1.06 |
| Outline of ink M composition | | | Content | 15 | 15 | 15 | 15 | 15 | 15 | 15 | 15 | 15 | 15 |
| | | (A) | Type | S104 | D604 | D604 | D604 | D604 | D604 | D604 | D604 | D604 | S104 |
| | | | Content | 0.5 | 1.2 | 1.2 | 1.2 | 1.2 | 1.2 | 1.2 | 1.2 | 1.2 | 0.5 |
| | | (B) | Type | EM108 | EM108 | EM103 | EM705 | EM108 | EM108 | EM108 | EM108 | EM108 | EM108 |
| | | | HLB value | 11.7 | 11.7 | 8.3 | 10.5 | 11.7 | 11.7 | 11.7 | 11.7 | 11.7 | 11.7 |
| | Surfactant | | Content | 1.0 | 1.0 | 1.0 | 1.0 | 1.0 | 1.0 | 1.0 | 1.0 | 1.0 | 1.0 |
| | | (C) | Type | BYK345 | BYK345 | BYK345 | BYK345 | BYK345 | BYK345 | BYK345 | BYK345 | BYK345 | BYK333 |
| | | | Content | 0.3 | 0.3 | 0.3 | 0.3 | 0.3 | 0.3 | 0.3 | 0.3 | 0.3 | 0.03 |
| | | (A) + (B) | | 1.5 | 2.2 | 2.2 | 2.2 | 2.2 | 2.2 | 2.2 | 2.2 | 2.2 | 1.5 |
| | | ((A) + (B))/(C) | | 5.0 | 7.3 | 7.3 | 7.3 | 7.3 | 7.3 | 7.3 | 7.3 | 7.3 | 50.0 |
| | Wax particles | | | Carnauba | Carnauba | Carnauba | Carnauba | Carnauba | Carnauba | Carnauba | Carnauba | Carnauba | Carnauba |
| | Resin particles | | | A | A | A | A | A | A | A | A | A | A |
| Dynamic surface tension of ink M at 10 msec | | | | 36.0 | 36.4 | 35.3 | 36.4 | 36.4 | 36.4 | 36.4 | 36.4 | 36.4 | 37.5 |
| Evaluation | Graininess | | | B | B | A | A | B | A | A | B | B | B |
| results | Intercolor bleeding | | A | | A | A | A | B | A | B | A | A | A |
| | Resolution | | A | | A | A | A | A | A | A | A | B | B |
| | Rub resistance | | A | | A | A | A | A | A | A | A | B | A |

**[Table 2]**

| | | | | Example 11 | Example 12 | Example 13 | Example 14 | Example 15 | Example 16 | Example 17 | Example 18 | Example 19 | Example 20 |
|---|---|---|---|---|---|---|---|---|---|---|---|---|---|
| Recording conditions | Difference T1 in landing time (s) | | | 0.2 | 0.2 | 0.2 | 0.2 | 0.2 | 0.2 | 0.2 | 0.2 | 0.2 | 0.2 |
| | Time T2 from landing to heating and drying (s) | | | 0.6 | 0.6 | 0.6 | 0.6 | 0.6 | 0.6 | 0.6 | 0.6 | 0.6 | 0.6 |
| | Transportation speed (m/min) | | | 80 | 80 | 80 | 80 | 80 | 80 | 80 | 80 | 80 | 80 |
| | Organic solvent | Solvent species A (ClogP value of -0.6 or greater and 2.7 or less) | Type | DEGmEE | DEGmEE | DEGiPE | DEGmBE | DEGiBE | EGmHE | PGmME | PGmEE | PGmBE | PGmPE |
| | | | ClogP | -0.39 | -0.39 | -0.08 | 0.67 | 0.09 | 1.90 | -0.30 | 0.09 | 1.15 | 0.62 |
| | | | Content | 15 | 15 | 10 | 10 | 10 | 3 | 15 | 10 | 10 | 10 |
| | | | Content × ClogP | -5.85 | -5.85 | -0.80 | 6.70 | 0.90 | 5.70 | -4.50 | 0.90 | 11.50 | 6.20 |
| | | Solvent other than solvent species A | Type | PG | PG | PG | PG | PG | PG | PG | PG | PG | PG |
| | | | ClogP | -1.06 | -1.06 | -1.06 | -1.06 | -1.06 | -1.06 | -1.06 | -1.06 | -1.06 | -1.06 |
| Outline of ink C composition | | | Content | 20 | 20 | 25 | 25 | 25 | 28 | 20 | 25 | 20 | 20 |
| | | (A) | Type | S104 | S104 | S104 | S104 | S104 | S104 | S104 | S104 | S104 | S104 |
| | | | Content | 0.5 | 0.5 | 0.5 | 0.5 | 0.5 | 0.5 | 0.5 | 0.5 | 0.5 | 0.5 |
| | | (B) | Type | EM103 | EM705 | EM103 | EM103 | EM103 | EM103 | EM103 | EM103 | EM103 | EM103 |
| | | | HLB value | 8.3 | 10.5 | 8.3 | 8.3 | 8.3 | 8.3 | 8.3 | 8.3 | 8.3 | 8.3 |
| | Surfactant | | Content | 1.0 | 1.0 | 1.0 | 1.0 | 1.0 | 1.0 | 1.0 | 1.0 | 1.0 | 1.0 |
| | | (C) | Type | BYK345 | BYK345 | BYK345 | BYK345 | BYK345 | BYK345 | BYK345 | BYK345 | BYK345 | BYK345 |
| | | | Content | 0.5 | 0.5 | 0.5 | 0.5 | 0.5 | 0.5 | 0.5 | 0.5 | 0.5 | 0.5 |
| | | (A) + (B) | | 1.5 | 1.5 | 1.5 | 1.5 | 1.5 | 1.5 | 1.5 | 1.5 | 1.5 | 1.5 |
| | | ((A) + (B))/(C) | | 3.0 | 3.0 | 3.0 | 3.0 | 3.0 | 3.0 | 3.0 | 3.0 | 3.0 | 3.0 |
| | Wax particles | | | Carnauba | Carnauba | Carnauba | Carnauba | Carnauba | Carnauba | Carnauba | Carnauba | Carnauba | Carnauba |
| | Resin particles | | | A | A | A | A | A | A | A | A | A | A |
| Dynamic surface tension of ink C at 10 msec | | | | 35.1 | 35.8 | 35.3 | 34.7 | 35.2 | 35.2 | 35.2 | 35.2 | 34.3 | 34.8 |
| | Organic solvent | Solvent species A (ClogP value of -0.6 or greater and 2.7 or less) | Type | DEGmEE | DEGmEE | DEGiPE | DEGmBE | DEGiBE | EGmHE | PGmME | PGmEE | PGmBE | PGmPE |
| | | | ClogP | -0.39 | -0.39 | -0.08 | 0.67 | 0.09 | 1.90 | -0.30 | 0.09 | 1.15 | 0.62 |
| | | | Content | 15 | 15 | 10 | 10 | 10 | 3 | 15 | 10 | 10 | 10 |
| | | | Content × ClogP | -5.85 | -5.85 | -0.80 | 6.70 | 0.90 | 5.70 | -4.50 | 0.90 | 11.50 | 6.20 |
| | | Solvent other than solvent species A | Type | PG | PG | PG | PG | PG | PG | PG | PG | PG | PG |
| | | | ClogP | -1.06 | -1.06 | -1.06 | -1.06 | -1.06 | -1.06 | -1.06 | -1.06 | -1.06 | -1.06 |
| Outline of ink M composition | | | Content | 15 | 15 | 20 | 20 | 20 | 23 | 15 | 20 | 15 | 15 |
| | | (A) | Type | S104 | S104 | S104 | S104 | S104 | S104 | S104 | S104 | S104 | S104 |
| | | | Content | 0.5 | 0.5 | 0.5 | 0.5 | 0.5 | 0.5 | 0.5 | 0.5 | 0.5 | 0.5 |
| | | (B) | Type | EM103 | EM705 | EM103 | EM103 | EM103 | EM103 | EM103 | EM103 | EM103 | EM103 |
| | | | HLB value | 8.3 | 10.5 | 8.3 | 8.3 | 8.3 | 8.3 | 8.3 | 8.3 | 8.3 | 8.3 |
| | Surfactant | | Content | 1.0 | 1.0 | 1.0 | 1.0 | 1.0 | 1.0 | 1.0 | 1.0 | 1.0 | 1.0 |
| | | (C) | Type | BYK345 | BYK345 | BYK345 | BYK345 | BYK345 | BYK345 | BYK345 | BYK345 | BYK345 | BYK345 |
| | | | Content | 0.3 | 0.3 | 0.3 | 0.3 | 0.3 | 0.3 | 0.3 | 0.3 | 0.3 | 0.3 |
| | | (A) + (B) | | 1.5 | 1.5 | 1.5 | 1.5 | 1.5 | 1.5 | 1.5 | 1.5 | 1.5 | 1.5 |
| | | ((A) + (B))/(C) | | 5.0 | 5.0 | 5.0 | 5.0 | 5.0 | 5.0 | 5.0 | 5.0 | 5.0 | 5.0 |
| | Wax particles | | | Carnauba | Carnauba | Carnauba | Carnauba | Carnauba | Carnauba | Carnauba | Carnauba | Carnauba | Carnauba |
| | Resin particles | | | A | A | A | A | A | A | A | A | A | A |
| Dynamic surface tension of ink M at 10 msec | | | | 35.1 | 35.8 | 35.3 | 34.7 | 35.2 | 35.2 | 35.2 | 35.2 | 34.3 | 34.8 |
| Evaluation results | Graininess | | | A | A | A | A | A | A | A | A | A | A |
| | Intercolor bleeding | | | A | A | A | A | A | A | A | A | A | A |
| | Resolution | | | A | A | A | A | A | B | A | A | C | B |
| | Rub resistance | | | A | A | A | A | A | A | A | A | A | A |

**[Table 3]**

| | | | | Example 21 | Example 22 | Example 23 | Example 24 | Example 25 | Example 26 | Example 27 | Example 28 | Example 29 | Example 30 |
|---|---|---|---|---|---|---|---|---|---|---|---|---|---|
| Recording conditions | Difference T1 in landing time (s) | | | 0.2 | 0.2 | 0.2 | 0.2 | 0.2 | 0.2 | 0.2 | 0.2 | 0.2 | 0.2 |
| | Time T2 from landing to heating and drying (s) | | | 0.6 | 0.6 | 0.6 | 0.6 | 0.6 | 0.6 | 0.6 | 0.6 | 0.6 | 0.6 |
| | Transportation speed (m/min) | | | 80 | 80 | 80 | 80 | 80 | 80 | 80 | 80 | 80 | 80 |
| | | Solvent species A (ClogP value of -0.6 or greater and 2.7 or less) | Type | 1,2-BG | 1,2-PentG | 1,2-HDO | 1,2-HDO | DEGmEE | DEGmEE | DEGmEE | DEGmEE | DEGmEE | DEGmEE |
| | | | | | | | 1,2-BG | | | | | | |
| | | | ClogP | -0.53 | 0 | 0.53 | 0.53 | -0.39 | -0.39 | -0.39 | -0.39 | -0.39 | -0.39 |
| | | | | | | | -0.53 | | | | | | |
| | | | Content | 10 | 10 | 10 | 5 | 15 | 15 | 15 | 15 | 15 | 15 |
| | | | | | | | 10 | | | | | | |
| | Organic solvent | | Content × ClogP | -5.30 | 0 | 5.30 | -2.65 | -5.85 | -5.85 | -5.85 | -5.85 | -5.85 | -5.85 |
| | | Solvent other than solvent species A | Type | PG | PG | PG | PG | PG | PG | PG | PG | PG | PG |
| | | | ClogP | -1.06 | -1.06 | -1.06 | -1.06 | -1.06 | -1.06 | -1.06 | -1.06 | -1.06 | -1.06 |
| Outline of ink C composition | | | Content | 20 | 20 | 20 | 20 | 20 | 20 | 20 | 20 | 20 | 20 |
| | | (A) | Type | S104 | S104 | S104 | S104 | S104 | S104 | D604 | D604 | DF110D | S104 |
| | | | Content | 0.5 | 0.5 | 0.5 | 0.5 | 0.5 | 0.5 | 2.5 | 0.05 | 2.5 | 0.05 |
| | | (B) | Type | EM103 | EM103 | EM103 | EM103 | EM103 | EM103 | EM108 | EM108 | EM108 | EM108 |
| | Surfactant | | HLB value | 8.3 | 8.3 | 8.3 | 8.3 | 8.3 | 8.3 | 11.7 | 11.7 | 11.7 | 11.7 |
| | | | Content | 1.0 | 1.0 | 1.0 | 1.0 | 1.0 | 1.0 | 1.0 | 0.8 | 1.0 | 0.8 |
| | | (C) | Type | BYK345 | BYK345 | BYK345 | BYK345 | BYK345 | BYK345 | BYK345 | BYK345 | BYK345 | BYK345 |
| | | | Content | 0.5 | 0.5 | 0.5 | 0.5 | 0.5 | 0.5 | 0.4 | 0.4 | 0.5 | 0.5 |
| | | (A) + (B) | | 1.5 | 1.5 | 1.5 | 1.5 | 1.5 | 1.5 | 3.5 | 0.85 | 3.5 | 0.85 |
| | | ((A) + (B))/(C) | | 3.0 | 3.0 | 3.0 | 3.0 | 3.0 | 3.0 | 8.8 | 2.1 | 7.0 | 1.7 |
| | Wax particles | | | Carnauba | Carnauba | Carnauba | Carnauba | PE | PE | Carnauba | Carnauba | Carnauba | Carnauba |
| | Resin particles | | | A | A | A | A | A | | A | A | A | A |
| Dynamic surface tension of ink C at 10 msec | | | | 35.9 | 35.4 | 34.9 | 35.2 | 35.2 | 35.5 | 35.1 | 39.2 | 28.3 | 39.0 |
| | | Solvent species A (ClogP value of -0.6 or greater and 2.7 or less) | Type | 1,2-BG | 1,2-PentG | 1,2-HDO | 1,2-HDO | DEGmEE | DEGmEE | DEGmEE | DEGmEE | DEGmEE | DEGmEE |
| | | | | | | | 1,2-BG | | | | | | |
| | | | ClogP | -0.53 | 0 | 0.53 | 0.53 | -0.39 | -0.39 | -0.39 | -0.39 | -0.39 | -0.39 |
| | | | | | | | -0.53 | | | | | | |
| | | | Content | 10 | 10 | 10 | 5 | 15 | 15 | 15 | 15 | 15 | 15 |
| | | | | | | | 10 | | | | | | |
| | Organic solvent | | Content × ClogP | -5.30 | 0 | 5.30 | -2.65 | -5.85 | -5.85 | -5.85 | -5.85 | -5.85 | -5.85 |
| | | Solvent other than solvent species A | Type | PG | PG | PG | PG | PG | PG | PG | PG | PG | PG |
| | | | ClogP | -1.06 | -1.06 | -1.06 | -1.06 | -1.06 | -1.06 | -1.06 | -1.06 | -1.06 | -1.06 |
| Outline of ink M composition | | | Content | 15 | 15 | 15 | 15 | 15 | 15 | 15 | 15 | 15 | 15 |
| | | (A) | Type | S104 | S104 | S104 | S104 | S104 | S104 | D604 | D604 | DF110D | S104 |
| | | | Content | 0.5 | 0.5 | 0.5 | 0.5 | 0.5 | 0.5 | 2.5 | 0.05 | 2.5 | 0.05 |
| | | (B) | Type | EM103 | EM103 | EM103 | EM103 | EM103 | EM103 | EM108 | EM108 | EM108 | EM108 |
| | | | HLB value | 8.3 | 8.3 | 8.3 | 8.3 | 8.3 | 8.3 | 11.7 | 11.7 | 11.7 | 11.7 |
| | Surfactant | | Content | 1.0 | 1.0 | 1.0 | 1.0 | 1.0 | 1.0 | 1.0 | 0.8 | 1.0 | 0.8 |
| | | (C) | Type | BYK345 | BYK345 | BYK345 | BYK345 | BYK345 | BYK345 | BYK345 | BYK345 | BYK345 | BYK345 |
| | | | Content | 0.3 | 0.3 | 0.3 | 0.3 | 0.3 | 0.3 | 0.3 | 0.3 | 0.3 | 0.3 |
| | | (A) + (B) | | 1.5 | 1.5 | 1.5 | 1.5 | 1.5 | 1.5 | 3.5 | 0.85 | 3.5 | 0.9 |
| | | ((A) + (B))/(C) | | 5.0 | 5.0 | 5.0 | 5.0 | 5.0 | 5.0 | 11.7 | 2.8 | 11.7 | 2.8 |
| | Wax particles | | | Carnauba | Carnauba | Carnauba | Carnauba | PE | PE | Carnauba | Carnauba | Carnauba | Carnauba |
| | Resin particles | | | A | A | A | A | A | - | A | A | A | A |
| Dynamic surface tension of ink M at 10 msec | | | | 35.9 | 35.4 | 34.9 | 35.2 | 35.2 | 35.5 | 35.1 | 39.2 | 28.3 | 39.0 |
| Evaluation results | Graininess | | | B | B | A | B | B | B | B | C | B | C |
| | Intercolor bleeding | | | A | A | B | A | A | A | A | A | A | A |
| | | | Resolution | A | A | A | A | B | B | B | A | C | A |
| | | | Rub resistance | B | B | B | B | B | C | A | A | A | A |

**[Table 4]**

| | | | | Comparative Example 1 | Comparative Example 2 | Comparative Example 3 | Comparative Example 4 | Comparative Example 5 | Comparative Example 6 | Comparative Example 7 |
|---|---|---|---|---|---|---|---|---|---|---|
| Recording conditions | Difference T1 in landing time (s) | | | 0.2 | 0.2 | 0.2 | 0.2 | 0.018 | 0.2 | 0.2 |
| | Time T2 from landing to heating and drvine (s) | | | 0.6 | 0.6 | 0.6 | 0.6 | 0.6 | 2.6 | 0.6 |
| | Transportation speed (m/min) | | | 80 | 80 | 80 | 80 | 400 | 80 | 80 |
| | Organic solvent | Solvent species A (ClogP value of -0.6 or greater and 2.7 or less) | Type | DEGmEE | DEGmEE | DEGmEE | DEGmEE | DEGmEE | DEGmEE | - |
| | | | ClogP | -0.39 | -0.39 | -0.39 | -0.39 | -0.39 | -0.39 | - |
| | | | Content | 15 | 15 | 15 | 15 | 15 | 15 | - |
| | | | Content × ClogP | -5.85 | -5.85 | -5.85 | -5.85 | -5.85 | -5.85 | - |
| | | Solvent other than solvent species A | Type | PG | PG | PG | PG | PG | PG | PG |
| | | | ClogP | -1.06 | -1.06 | -1.06 | -1.06 | -1.06 | -1.06 | -1.06 |
| Outline of ink C composition | | | Content | 20 | 20 | 20 | 20 | 20 | 20 | 20 |
| | | (A) | Type | S104 | - | S104 | S104 | S104 | S104 | S104 |
| | | | Content | 0.5 | - | 0.5 | 0.5 | 0.5 | 0.5 | 0.5 |
| | | (B) | Type | EM103 | EM103 | - | EM103 | EM108 | EM108 | EM108 |
| | | | HLB value | 8.3 | 8.3 | - | 8.3 | 11.7 | 11.7 | 11.7 |
| | Surfactant | | Content | 1.0 | 1.0 | - | 1.0 | 1.0 | 1.0 | 1.0 |
| | | (C) | Type | BYK345 | BYK345 | BYK345 | - | BYK345 | BYK345 | BYK345 |
| | | | Content | 0.5 | 0.5 | 0.5 | - | 0.4 | 0.4 | 0.4 |
| | | (A) + (B) | | 1.5 | 1.0 | 0.5 | 1.5 | 1.5 | 1.5 | 1.5 |
| | | ((A) + (B))/(C) | | 3.0 | 2.0 | 1.0 | - | 3.8 | 3.8 | 3.8 |
| | Wax particles | | | - | Carnauba | Carnauba | Carnauba | Carnauba | Carnauba | Carnauba |
| | Resin particles | | | A | A | A | A | A | A | A |
| Dynamic surface tension of ink C at 10 msec | | | | 35.3 | 40.5 | 36.2 | 35.3 | 36.4 | 36.4 | 36.0 |
| | Organic solvent | Solvent species A (ClogP value of -0.6 or greater and 2.7 or less) | Type | DEGmEE | DEGmEE | DEGmEE | DEGmEE | DEGmEE | DEGmEE | - |
| | | | ClogP | -0.39 | -0.39 | -0.39 | -0.39 | -0.39 | -0.39 | - |
| | | | Content | 15 | 15 | 15 | 15 | 15 | 15 | - |
| | | | Content × ClogP | -5.85 | -5.85 | -5.85 | -5.85 | -5.85 | -5.85 | - |
| | | Solvent other than solvent species A | Type | PG | PG | PG | PG | PG | PG | PG |
| | | | ClogP | -1.06 | -1.06 | -1.06 | -1.06 | -1.06 | -1.06 | -1.06 |
| Outline of ink M composition | | | Content | 15 | 15 | 15 | 15 | 15 | 15 | 15 |
| | | (A) | Type | S104 | - | S104 | S104 | S104 | S104 | S104 |
| | | | Content | 0.5 | - | 0.5 | 0.5 | 0.5 | 0.5 | 0.5 |
| | | (B) | Type | EM103 | EM103 | - | EM103 | EM108 | EM108 | EM108 |
| | | | HLB value | 8.3 | 8.3 | - | 8.3 | 11.7 | 11.7 | 11.7 |
| | Surfactant | | Content | 1.0 | 1.0 | - | 1.0 | 1.0 | 1.0 | 1.0 |
| | | (C) | Type | BYK345 | BYK345 | BYK345 | - | BYK345 | BYK345 | BYK345 |
| | | | Content | 0.4 | 0.4 | 0.4 | - | 0.4 | 0.4 | 0.3 |
| | | (A) + (B) | | 1.5 | 1.0 | 0.5 | 1.5 | 1.5 | 1.5 | 1.5 |
| | | ((A) + (B))/(C) | | 3.8 | 2.5 | 1.3 | - | 3.8 | 3.8 | 5.0 |
| | Wax particles | | | - | Carnauba | Carnauba | Carnauba | Carnauba | Carnauba | Carnauba |
| | Resin particles | | | A | A | A | A | A | A | A |
| Dynamic surface tension of ink M at 10 msec | | | | 35.3 | 40.5 | 36.2 | 35.3 | 36.4 | 36.4 | 36.0 |
| Evaluation results | Graininess | | | A | E | D | B | E | C | E |
| | Intercolor bleeding | | | C | B | E | E | C | E | B |
| | Resolution | | | C | B | C | C | E | E | B |
| | Rub resistance | | | E | C | C | C | E | B | C |

As listed in Tables 1 to 3, in each example in which the T1 (difference in landing time; seconds) was 0.02 or longer and 1.2 or shorter, the T2 (time from landing to heating and drying; seconds) was 2.0 or shorter, the transportation speed of the recording medium was in a range of 40 m/min to 300 m/min, each of the first ink (ink C) and the second ink (ink M) contained water, an organic solvent, a surfactant, and wax particles, the organic solvent in each of the first ink (ink C) and the second ink (ink M) included a solvent species A having a ClogP value of -0.60 or greater and 2.70 or less, the surfactant included an acetylene-based surfactant (A), a polyoxyethylene alkyl ether-based surfactant (B) having an HLB value of 4.0 or greater and 18.0 or less, and a polyether-modified silicone-based surfactant (C), an image with excellent graininess (that is, the granularity suppression property), resolution, and rub resistance and with suppressed intercolor bleeding could be recorded.

As listed in Table 4, the results of each comparative example were as follows as compared with the results of each example.

In Comparative Example 1 in which the first ink (ink C) and the second ink (ink M) did not contain wax particles, the rub resistance of the image was degraded.

In Comparative Example 2 in which the first ink (ink C) and the second ink (ink M) did not contain the acetylene-based surfactant (A), the graininess (that is, the granularity suppression property) of the image was degraded.

In Comparative Example 3 in which the first ink (ink C) and the second ink (ink M) did not contain the polyoxyethylene alkyl ether-based surfactant (B), the graininess of the image was degraded, and the intercolor bleeding could not be suppressed.

In Comparative Example 4 in which the first ink (ink C) and the second ink (ink M) did not contain the polyether-modified silicone-based surfactant (C), intercolor bleeding could not be suppressed.

In Comparative Example 5 in which the transportation speed of the recording medium was greater than 300 m/min and the T1 was shorter than 0.020, the graininess of the image, the resolution of the image, and the rub resistance of the image were degraded.

In Comparative Example 6 in which the T2 (time from landing to heating and drying; seconds) was longer than 2.0, the intercolor bleeding of the image could not be suppressed, and the resolution of the image was degraded.

In Comparative Example 7 in which the first ink (ink C) and the second ink (ink M) did not contain the solvent species A, the graininess of the image was degraded.

As shown in the results of Examples 19 and 20, it was found that in each of the first ink and the second ink, in a case where the sum of the products of the ClogP of the solvent species A and the content of the solvent species A with respect to the total amount of the ink in units of % by mass (listed in the columns of "content × ClogP" in Table 1 to Table 4) was -10.00 or greater and 10.00 or less (Example 20), the resolution of the image was further improved.

As shown in the results of Examples 1 and 29, it was found that in a case where the dynamic surface tension of each of the first ink and the second ink at 10 milliseconds was 29.0 mN/m or greater (Example 1), the resolution of the image was further improved.

As shown in the results of Examples 1 and 30, it was found that in a case where the dynamic surface tension of each of the first ink and the second ink at 10 milliseconds was 38.0 mN/m or less (Example 1), the graininess of the image was further improved.

As shown in the results of Examples 25 and 26, it was found that in a case where each of the first ink and the second ink contained resin particles (Example 25), the rub resistance of the image was further improved.

As shown in the results of Examples 2 and 28, it was found that in a case where the total content ("(A) + (B)") of the acetylene-based surfactant (A) and the polyoxyethylene alkyl ether-based surfactant (B) having an HLB value of 4.0 or greater and 18.0 or less in each of the first ink and the second ink was 1.0% by mass or greater with respect to the total amount of the ink (Example 2), the graininess of the image was further improved.

As shown in the results of Examples 2 and 27, it was found that in a case where the above-described total content ("(A) + (B)") in each of the first ink and the second ink was 3.0% by mass or less with respect to the total amount of the ink, the resolution of the image was further improved.

The disclosure of JP2022-037507 filed on March 10, 2022 is incorporated herein by reference in its entirety.

All documents, patent applications, and technical standards described in the present specification are incorporated herein by reference to the same extent as in a case of being specifically and individually noted that individual documents, patent applications, and technical standards are incorporated by reference.

## Claims

1. An image recording method comprising:
a step of recording an image by sequentially applying a first ink and a second ink, which have hues different from each other, onto a recording medium transported at a transportation speed of 40 m/min or greater and 300 m/min or less respectively under a condition that a resolution in a direction orthogonal to a transport direction of the recording medium by an ink jet method is 1200 dpi or greater, and heating and drying the applied first ink and second ink,
wherein in the step of recording an image, in a case where a difference in landing time between the first ink and the second ink is defined as T1 seconds and a time from a time point at which a last liquid droplet of the second ink lands to a time point at which the liquid droplet is heated and dried is defined as T2 seconds, T1 is 0.020 or longer and 1.2 or shorter, and T2 is 2.0 or shorter,
each of the first ink and the second ink contains water, an organic solvent, a surfactant, and wax particles,
the organic solvent includes a solvent species A represented by Formula (1) or Formula (2) and having a ClogP value of -0.60 or greater and 2.70 or less, and
the surfactant includes an acetylene-based surfactant (A), a polyoxyethylene alkyl ether-based surfactant (B) having an HLB value of 4.0 or greater and 18.0 or less, and a polyether-modified silicone-based surfactant (C), 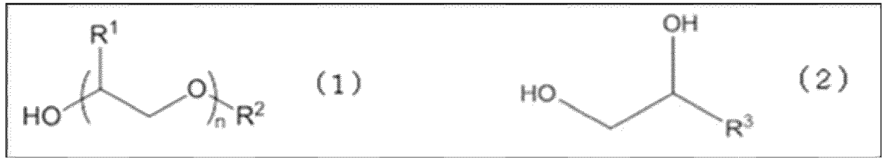
in Formula (1), R¹ represents a hydrogen atom or a methyl group, R² represents a chain-like hydrocarbon group having 1 to 6 carbon atoms, and n represents an integer of 1 to 3,
in Formula (2), R³ represents a chain-like hydrocarbon group having 1 to 4 carbon atoms.

2. The image recording method according to claim 1,
wherein in each of the first ink and the second ink, in a case where a sum of products of the ClogP of the solvent species A and a content of the solvent species A with respect to a total amount of the inks in units of % by mass is calculated, the sum of products is -10.00 or greater and 10.00 or less.

3. The image recording method according to claim 1 or 2,
wherein the transportation speed of the recording medium is 60 m/min or greater and 200 m/min or less.

4. The image recording method according to any one of claims 1 to 3,
wherein each of the first ink and the second ink has a dynamic surface tension of 29.0 mN/m or greater and 38.0 mN/m or less at 10 milliseconds.

5. The image recording method according to any one of claims 1 to 4,
wherein each of the first ink and the second ink contains resin particles.

6. The image recording method according to any one of claims 1 to 5,
wherein the solvent species A includes at least one selected from the group consisting of ethylene glycol monohexyl ether, diethylene glycol monoethyl ether, diethylene glycol monoisopropyl ether, diethylene glycol monobutyl ether, diethylene glycol monoisobutyl ether, propylene glycol monomethyl ether, propylene glycol monoethyl ether, propylene glycol monopropyl ether, propylene glycol monobutyl ether, 1,2-butanediol, 1,2-pentanediol, and 1,2-hexanediol.

7. The image recording method according to any one of claims 1 to 6,
wherein the acetylene-based surfactant (A) in each of the first ink and the second ink includes an acetylene-based surfactant having an HLB value of 3.5 or greater and 9.0 or less.

8. The image recording method according to any one of claims 1 to 7,
wherein a total content of the acetylene-based surfactant (A) and the polyoxyethylene alkyl ether-based surfactant (B) having an HLB value of 4.0 or greater and 18.0 or less in each of the first ink and the second ink is in a range of 1.0% by mass to 3.0% by mass with respect to a total amount of the inks.

9. The image recording method according to any one of claims 1 to 8,
wherein the wax particles in each of the first ink and the second ink include at least one selected from the group consisting of polyethylene wax and carnauba wax.
